(19) Europäisches Patentamt
European Patent Office
Office européen des brevets

(11) **EP 1 364 286 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(21) Anmeldenummer: **02706648.9**

(22) Anmeldetag: **28.01.2002**

(51) Int Cl.:
*G06F 11/00* (2006.01)

(86) Internationale Anmeldenummer:
**PCT/DE2002/000315**

(87) Internationale Veröffentlichungsnummer:
**WO 2002/067119 (29.08.2002 Gazette 2002/35)**

(54) **VERFAHREN UND ANORDNUNG ZUR ERMITTLUNG EINER GESAMTFEHLERBESCHREIBUNG ZUMINDEST EINES TEILS EINES TECHNISCHEN SYSTEMS, COMPUTER PROGRAMM-ELEMENT UND COMPUTERLESBARES SPEICHERMEDIUM**

METHOD AND DEVICE FOR DETERMINING A FULL ERROR DESCRIPTION FOR AT LEAST ONE PART OF A TECHNICAL SYSTEM, COMPUTER PROGRAM ELEMENT AND COMPUTER-READABLE STORAGE MEDIUM

PROCEDE ET DISPOSITIF POUR DETERMINER UNE DESCRIPTION D'ERREUR TOTALE D'AU MOINS UNE PARTIE D'UN SYSTEME TECHNIQUE, ELEMENT DE PROGRAMME INFORMATIQUE ET SUPPORT D'INFORMATIONS LISIBLE PAR UN ORDINATEUR

(84) Benannte Vertragsstaaten:
**DE FR GB**

(30) Priorität: **20.02.2001 DE 10108053**

(43) Veröffentlichungstag der Anmeldung:
**26.11.2003 Patentblatt 2003/48**

(73) Patentinhaber: **SIEMENS AKTIENGESELLSCHAFT**
**80333 München (DE)**

(72) Erfinder:
• **LIGGESMEYER, Peter**
  **14469 Potsdam (DE)**
• **LOHNER, Manfred**
  **80807 München (DE)**
• **MÄCKEL, Oliver**
  **81929 München (DE)**
• **ROTHFELDER, Martin**
  **80639 München (DE)**

(56) Entgegenhaltungen:
**WO-A-00/75780          US-A- 5 561 762**

• **SANG HOON HAN ET AL.: "Development of a Computer Code AFTC for Fault Tree Construction Using Decision Table Method and Super Component Concept" RELIABILITY ENGINEERING AND SYSTEM SAFETY, Bd. 15, 1989, Seiten 15-31, XP009007338**

• **CAMARINOPOULOS L ET AL: "EINE METHODE ZUR AUTOMATISCHEN FEHLERBAUMENTWICKLUNG. A METHOD FOR AUTOMATIC FAULT TREE SYNTHESIS" ANGEWANDTE INFORMATIK. APPLIED INFORMATICS, VIEWEG UND SOHN VERLAG GMBH. BRAUNSCHWEIG, DE, Bd. 27, Nr. 9, 1. September 1985 (1985-09-01), Seiten 389-399, XP000715927 ISSN: 0013-5704**

• **DE VRIES R C: "An automated methodology for generating a fault tree" IEEE TRANSACTIONS ON RELIABILITY, APRIL 1990, USA, Bd. 39, Nr. 1, Seiten 76-86, XP002236012 ISSN: 0018-9529**

• **LIGGESMEYER P ET AL: "QUANTIFYING THE RELIABILITY OF EMBEDDED SYSTEMS BY AUTOMATED ANALYSIS" PROCEEDINGS INTERNATIONAL CONFERENCE ON DEPENDABLE SYSTEMS AND NETWORKS. DSN 2001. G TEBORG, SWEDEN, JULY 1 - 4, 2001, INTERNATIONAL CONFERENCE ON DEPENDABLE SYSTEMS AND NETWORKS, LOS ALAMITOS, CA: IEEE COMP. SOC, US, 1. Juli 2001 (2001-07-01), Seiten 89-94, XP001042404 ISBN: 0-7695-1101-5**

**Beschreibung**

Die Erfindung betrifft die Ermittlung einer Gesamtfehlerbeschreibung zumindest eines Teils eines technischen Systems.

Ein solches Verfahren ist bekannt, bei dem für ein technisches System eine Fehlerbeschreibung in Form eines Fehlerbaums manuell ermittelt wird.

Aufgrund der manuellen Ermittlung der Fehlerbeschreibung sind insbesondere die unkoordinierte und damit unsystematische Erstellung der Fehlerbeschreibung und damit die mögliche Unvollständigkeit und formal nicht beweisbare Korrektheit des ermittelten Fehlerbaums erhebliche Nachteile. Erhebliche Bedeutung gewinnen diese Nachteile insbesondere bei komplexen sicherheitskritischen Systemen, an deren Entwicklung hohe Anforderungen zu stellen sind.

Ein weiterer Nachteil bei der manuellen Ermittlung eines Fehlerbaums ist darin zu sehen, dass er oftmals nicht in einem geplanten Zeit- und Kostenrahmen ermittelbar ist aufgrund einer zu großen Komplexität des zu beschreibenden Systems. Die Qualität eines manuell erstellten Fehlerbaums ist daher hinsichtlich eines möglicherweise erforderlichen Sicherheitsnachweises zweifelhaft. Es besteht insbesondere die Gefahr, dass kritische Situationen innerhalb des Systems nicht bemerkt werden, was zu Gefährdungen des technischen Systems führen könnte.

Unter einem Fehlerbaum ist, wie in [1] beschrieben, eine Struktur zu verstehen, die logische Zusammenhänge zwischen Eingangsgrößen des Fehlerbaums beschreibt, welche Eingangsgrößen zu einem vorgegebenen unerwünschten Ereignis führen.

Aus [2] sind Grundlagen zur Fehlerbaumanalyse bekannt. In [2] sind ferner verschiedene Verfahren zur Fehlerbaumanalyse beschrieben.

Aus [3] ist ein Verfahren zur Erstellung eines Fehlerbaums bekannt, wobei mit dem Fehlerbaum versucht wird, allerdings in unzuverlässiger und unvollständiger Weise, vorgegebenen Programmcode unter Verwendung von Referenzfehlerbäumen für vorgegebene Befehlsarten eines Computerprogramms, zu untersuchen.

Aus [4] ist ein Verfahren zur Ermittlung einer Gesamtfehlerbeschreibung eines technischen Systems beschrieben. Bei diesem Verfahren wird eine Gesamtfehlerbeschreibung für das technische System ermittelt, welches mit einer durch den Rechner verarbeitbaren, gespeicherten Systembeschreibung beschrieben ist. Die Systembeschreibung enthält Informationen über in dem System vorhandene Elemente und über deren Verbindungen miteinander. Für jedes berücksichtigte Element wird unter Verwendung einer gespeicherten Fehlerbeschreibung, die jeweils einem Referenzelement zugeordnet ist, eine Elementenfehlerbeschreibung ermittelt. Aus den Elementenfehlerbeschreibungen wird die Gesamtfehlerbeschreibung unter Berücksichtigung der Information über die Verbindungen der Elemente ermittelt.

Aus [5] ist ein weiteres Verfahren zur Ermittlung einer Gesamtfehlerbeschreibung eines technischen Systems beschrieben. Dabei handelt es sich um ein Computerprogramm-basiertes System. Aus dem Computerprogramm werden eine Kontrollflußbeschreibung und eine Datenflußbeschreibung ermittelt und es werden Programmelemente aus dem Computerprogramm ausgewählt. Für jedes ausgewählte Programmelement wird unter Verwendung einer gespeicherten Fehlerbeschreibung, die jeweils einen Referenzelement zugeordnet ist, eine Elementenfehlerbeschreibung ermittelt, mit der mögliche Fehler des jeweiligen Programmelements beschrieben werden. Aus dem Elementenfehlerbeschreibungen wird die Gesamtsfehlerbeschreibung unter Berüchsichtigung der Kontrollflußbeschreibung und der Datenflußbeschreibung ermittelt.

Aus [6] ist das Konzept der Superkomponenten bekannt. Dabei werden mehrere Komponenten eines technischen Systems zusammengefaßt und durch eine sogenannte Superkomponenten-Bibliothek beschrieben. Somit können zusammenhängende Subsysteme, die häufig in einem technischen System zusammen zu finden sind, schneller und effizienter modelliert werden. Der Gesamtfehlerbaum wind in [6] unter Heranziehung der Superkomponenten berechnet, ohne dabei auf Zuvorberechnete und abgespeicherte Gruppen-Fehlerbeschreibungen zurückzugreifen.

Aus [7] ist ein weiteres dem Superkomponenten ähnliches Konzept, bekannt (Untersystemen Konzept). Es kann für die Modellierung eines Systems zwecks Fehlerbeschreibung benutzt werden. Aus [7] geht jedoch nicht hervor, daß eine Fehlerbeschreibung für Untersysteme gespeichert wird, die zur Berechnung des Gesamtfehlerbaumes herangezogen werden kann.

Somit liegt der Erfindung das Problem zugrunde, eine Fehlerbeschreibung zumindest eines Teils eines technischen Systems zu ermitteln, die zuverlässiger ist als die ein mittels eines bekannten Verfahrens ermittelter Fehlerbaum.

Das Problem wird durch das Verfahren, die Anordnung, das Computerprogramm-Element und das computerlesbare Speichermedium mit den Merkmalen gemäß den unabhängigen Patentansprüchen gelöst.

Bei einem Verfahren zur Ermittlung einer Gesamtfehlerbeschreibung zumindest eines Teils eines technischen Systems, durch einen Rechner, ist das System mit einer durch den Rechner verarbeitbaren, gespeicherten Systembeschreibung beschrieben. Die Systembeschreibung enthält Informationen über in dem System vorhandene Elemente und über deren Verbindungen miteinander. Für jedes berücksichtigte Element wird unter Verwendung einer gespeicherten Fehlerbeschreibung, die jeweils einem Referenzelement zugeordnet ist, eine Elementenfehlerbeschreibung ermittelt, mit der mögliche Fehler des jeweiligen Elements beschrieben werden. Mit einer Fehlerbeschreibung eines Referenzelements werden mögliche Fehler des jeweiligen Referenzelements beschrieben. Zumindest ein Teil der Referenzelemente ist zu einer Referenzelementengruppe gruppiert. Anders ausgedrückt werden mehrere Referenzelemente zu einer Referenzelementengruppe gruppiert. Zu den Referenzelementen einer Referenzelementengruppe wird unter Verwendung einer gespeicherten Gruppen-Fehlerbeschreibung, die jeweils einer Referenzelementengruppe zugeordnet ist, eine Gruppenfehlerbeschreibung ermittelt, mit der mögliche Fehler der Referenzelemente der Referenzelementengruppe beschrieben werden. Aus den Elementenfehlerbeschreibungen und den Gruppenfehlerbeschreibungen wird die Gesamtfehlerbeschreibung unter Berücksichtigung der Information über die Verbindungen der Elemente ermittelt.

Eine Anordnung zur Ermittlung einer Gesamtfehlerbeschreibung zumindest eines Teils eines technischen Systems weist einen Prozessor auf, der derart eingerichtet ist, dass folgende Schritte durchführbar sind:

- as System ist mit einer durch die Anordnung verarbeitbaren, gespeicherten Systembeschreibung beschrieben,
- die Systembeschreibung umfasst Informationen über in dem System vorhandene Elemente und über deren Verbindungen miteinander,
- für jedes berücksichtigte Element wird unter Verwendung einer gespeicherten Fehlerbeschreibung, die jeweils einem Referenzelement zugeordnet ist, eine Elementenfehlerbeschreibung ermittelt, mit der mögliche Fehler des jeweiligen Elements beschrieben werden,
- mit einer Fehlerbeschreibung eines Referenzelements werden mögliche Fehler des jeweiligen Referenzelements beschrieben,
- zumindest ein Teil der Referenzelemente ist zu einer Referenzelementengruppe gruppiert,
- zu den Referenzelementen einer Referenzelementengruppe wird unter Verwendung einer gespeicherten Gruppen-Fehlerbeschreibung, die jeweils einer Referenzelementengruppe zugeordnet ist, eine Gruppenfehlerbeschreibung ermittelt, mit der mögliche Fehler der Referenzelemente der Referenzelementengruppe beschrieben werden, und
- aus den Elementenfehlerbeschreibungen und den Gruppenfehlerbeschreibungen wird die Gesamtfehlerbeschreibung unter Berücksichtigung der Information über die Verbindungen der Elemente ermittelt.

Ein Computerprogramm-Element enthält ein computerlesbares Speichermedium, auf dem ein Programm gespeichert ist, das es einem Computer ermöglicht, nachdem es in einem Speicher des Computer geladen worden ist, folgende Schritte durchzuführen, zur Ermittlung einer Gesamtfehlerbeschreibung zumindest eines Teiles eines technischen Systems:

- das System ist mit einer durch die Anordnung verarbeitbaren, gespeicherten Systembeschreibung beschrieben,
- die Systembeschreibung umfasst Informationen über in dem System vorhandene Elemente und über deren Verbindungen miteinander,
- für jedes berücksichtigte Element wird unter Verwendung einer gespeicherten Fehlerbeschreibung, die jeweils einem Referenzelement zugeordnet ist, eine Elementenfehlerbeschreibung ermittelt, mit der mögliche Fehler des jeweiligen Elements beschrieben werden,
- mit einer Fehlerbeschreibung eines Referenzelements werden mögliche Fehler des jeweiligen Referenzelements beschrieben,
- zumindest ein Teil der Referenzelemente ist zu einer Referenzelementengruppe gruppiert,
- zu den Referenzelementen einer Referenzelementengruppe wird unter Verwendung einer gespeicherten Gruppen-Fehlerbeschreibung, die jeweils einer Referenzelementengruppe zugeordnet ist, eine Gruppenfehlerbeschreibung ermittelt, mit der mögliche Fehler der Referenzelemente der Referenzelementengruppe beschrieben werden, und
- aus den Elementenfehlerbeschreibungen und den Gruppenfehlerbeschreibungen wird die Gesamtfehlerbeschreibung unter Berücksichtigung der Information über die Verbindungen der Elemente ermittelt.

Auf einem computerlesbaren Speichermedium ist ein Programm gespeichert, das es einem Computer ermöglicht, nachdem es in einen Speicher des Computers geladen worden ist, folgende Schritte durchzuführen zur Ermittlung einer Gesamtfehlerbeschreibung zumindest eines Teils eines technischen Systems:

- das System ist mit einer durch die Anordnung verarbeitbaren, gespeicherten Systembeschreibung beschrieben,
- die Systembeschreibung umfasst Informationen über in dem System vorhandene Elemente und über deren Verbindungen miteinander,
- für jedes berücksichtigte Element wird unter Verwendung einer gespeicherten Fehlerbeschreibung, die jeweils einem Referenzelement zugeordnet ist, eine Elementenfehlerbeschreibung ermittelt, mit der mögliche Fehler des jeweiligen Elements beschrieben werden,
- mit einer Fehlerbeschreibung eines Referenzelements werden mögliche Fehler des jeweiligen Referenzelements beschrieben,
- zumindest ein Teil der Referenzelemente ist zu einer Referenzelementengruppe gruppiert,
- zu den Referenzelementen einer Referenzelementengruppe wird unter Verwendung einer gespeicherten Gruppen-Fehlerbeschreibung, die jeweils einer Referenzelementengruppe zugeordnet ist, eine Gruppenfehlerbeschreibung ermittelt, mit der mögliche Fehler der Referenzelemente der Referenzelementengruppe beschrieben werden, und

- aus den Elementenfehlerbeschreibungen und den Gruppenfehlerbeschreibungen wird die Gesamtfehlerbeschreibung unter Berücksichtigung der Information über die Verbindungen der Elemente ermittelt.

Durch die Erfindung wird es möglich, eine Gesamtfehlerbeschreibung zumindest eines Teils eines technischen Systems zu ermitteln, bei dem die Vollständigkeit sowie die Konsistenz und Fehlerlosigkeit der ermittelten Gesamtfehlerbeschreibung gewährleistet ist.

Ein weiterer Vorteil ist darin zu sehen, dass durch die Erfindung eine automatisierte Ermittlung der Gesamtfehlerbeschreibung möglich wird.

Ferner wird durch die Erfindung erreicht, dass möglicherweise sicherheitsrelevante Zusammenhänge zwischen den einzelnen Komponenten des technischen Systems, anders ausgedrückt zwischen den Referenzelementen einer Referenzelementengruppe erkannt und somit berücksichtigt werden können.

Die erfindungsgemäße Ermittlung der Gesamtfehlerbeschreibung ist damit auch kostengünstiger und erheblich schneller durchführbar als mit den bekannten Verfahren und führt zu einer verbesserten Berücksichtigung auch komplexerer Fehlerzusammenhängen zwischen Komponenten einer Komponentengruppe in dem technischen System.

Im weiteren wird unter einem technischen System ein System verstanden, welches mittels einer Systembeschreibung beschreibbar ist, in der einzelne Elemente des technischen Systems und deren Verbindungen miteinander zur Beschreibung des technischen Systems möglich sind. Ein Beispiel eines solchen technischen Systems ist in einer elektrischen Schaltungsanordnung zu sehen, die beispielsweise mit Hilfe sogenannter Netzlisten in einer Strukturbeschreibungssprache, beispielsweise EDIF, SPICE oder auch VHDL beschrieben wird. Ein weiteres Beispiel für ein solches technisches System ist in einer industriellen Anlage, beispielsweise einer Kraftwerksanlage oder auch einer größeren industriellen Anlage, beispielsweise einer Walzstraße, zu sehen, wenn die jeweilige Anlage in ihren jeweiligen Elementen und deren Verbindungen beschreibbar ist.

Die Erfindung ist somit nicht auf ein ganz bestimmtes technisches System beschränkt, sondern ist auf jedes technische System anwendbar, das Elemente umfasst, die jeweils im Rahmen einer Systembeschreibung gemeinsam mit Informationen über die Verbindungen der Elemente beschrieben werden können.

Referenzelemente sind in einem Rechner gespeicherte, vorgegebene Elemente, die in einem solchen, jeweils betrachteten technischen System enthalten sein können. Einem Referenzelement ist jeweils eine Fehlerbeschreibung zugeordnet, mit der mögliche Fehler des jeweiligen Referenzelements beschrieben sind. Unter einem Referenzelement ist beispielsweise ein elementares Bauelement, ein Block, der Bauelemente und weitere Blöcke enthalten kann oder logisch beschriebene Komponenten, beispielsweise ein UND-Gatter, zu verstehen.

Unter einer Referenzelementengruppe ist anschaulich eine vorzugsweise gemäß einem vorgegebenen Gruppierungskriterium zusammengestellte, d.h. gruppierte Gruppe von Referenzelementen zu verstehen, beispielsweise eine Mehrzahl von Referenzelementengruppe gleichen Typs. Ein Beispiel für eine solche Referenzelementengruppe ist eine Mehrzahl von Logikgattern einer bestimmten Funktionalität, beispielsweise eine Mehrzahl von

- UND-Gattern,
- EXKLUSIV-ODER-Gattern,
- Nicht-UND-Gattern,
- AND-Gattern,
- INKLUSIV-ODER-Gattern.

Ferner können auch gleichartige Bauelemente, beispielsweise Optokoppler, Verstärkerelemente, etc. jeweils zu einer Referenzelementengruppe gruppiert werden. Allgemein kann die Gruppierung gemäß einer frei vorgebbaren Gruppierungsregel erfolgen.

Bevorzugte Weiterbildung der Erfindung ergeben sich aus den abhängigen Ansprüchen.

Die Gruppenfehlerbeschreibung kann zumindest einen Fehler enthalten, der eine Auswirkung auf mehrere Referenzelemente der Referenzelementengruppe hat. Durch diese Ausgestaltung der Erfindung wird es möglich, Fehler, die beispielsweise bei Komponenten, die gemeinsam auf einem Chip realisiert sind, jedoch in unterschiedlichen örtlichen Bereichen des Gesamtsystems, d.h. z.B. einer gesamten elektrischen Schaltung verschaltet sind, auf dem Chip auftreten und somit zu mehreren Fehlern in unterschiedlichen Schaltungsbereichen führen, sehr schnell und einfach zu ermitteln.

Die Systembeschreibung kann in einer Hardware-Strukturbeschreibungssprache vorliegen, beispielsweise in EDIF, SPICE, VHDL, etc.

Ferner kann die Systembeschreibung Information über eine Informationsflussrichtung umfassen, mit der angegeben wird, in welcher Richtung sich Information innerhalb des technischen Systems ausbreitet. Die Ermittlung der Gesamtfehlerbeschreibung kann in diesem Fall unter Berücksichtigung der Informationsflussrichtung erfolgen.

Auf diese Weise wird die Ermittlung der Gesamtfehlerbeschreibung weiter vereinfacht und damit noch schneller durchführbar.

In einer Weiterbildung kann die Fehlerbeschreibung in Form eines gespeicherten Fehlerbaums vorliegen. Die Elementenfehlerbeschreibung wird als Elementenfehlerbaum ermittelt und die Gesamtfehlerbeschreibung wird in diesem Fall als Gesamtfehlerbaum ermittelt.

Durch diese Weiterbildung wird eine normierte Analyse des technischen Systems ermöglicht, die ein leichteres Verstehen der Gesamtfehlerbeschreibung durch einen Benutzer gewährleistet, da die Benutzer eine normierte Darstellung der Gesamtfehlerbeschreibung leichter und in übersichtlicherer Form aufnehmen.

In einer weiteren Ausgestaltung kann die Fehlerbeschreibung in Form einer Gleichung vorliegen, die mögliche Zustände des Referenzelements beschreibt. In diesem Fall wird die Elementenfehlerbeschreibung als Elementengleichung ermittelt und die Gesamtfehlerbeschreibung als Gesamtfehlergleichung.

Durch diese Ausgestaltung wird es auf einfache Weise möglich, Wechselwirkungen zwischen einzelnen Elementen des technischen Systems zu berücksichtigen. Üblicherweise wird das Verhalten der einzelnen Elemente des technischen Systems im Normalfall und bei Vorliegen von Ausfällen, d.h. Fehlern, jeweils durch eine Boolesche Gleichung beschrieben. Für die betrachtete, vorgegebene unerwünschte Wirkung der jeweiligen Fehlerbeschreibung wird das Gleichungssystem gelöst.

Die Gesamtfehlergleichung kann in einem Gesamtfehlerbaum umgesetzt werden.

Zumindest ein Referenzelement kann ein Element einer elektrischen Schaltung, beispielsweise einen elektrischen Widerstand, einen Kondensator, eine elektrische Spule, einen Transistor, einen Operationsverstärker, etc. beschreiben.

Die Erfindung kann vorteilhaft zur Fehleranalyse des technischen Systems eingesetzt werden, beispielsweise unter Einsatz der in [3] beschriebenen Verfahren.

In einer weiteren Ausgestaltung wird die Gesamtfehlerbeschreibung als Gesamtfehlerbaum ermittelt und der Gesamtfehlerbaum wird hinsichtlich vorgebbarer Rahmenbedingungen verändert, beispielsweise durch Hinzufügen eines Ergänzungsfehlerbaums.

Durch diese weitere Ausgestaltung wird die Ermittlung der Gesamtfehlerbeschreibung und die Gesamtfehlerbeschreibung selbst flexibler und damit für einen Benutzer leichter handhabbar und leichter anpassbar an die tatsächlichen Erfordernisse bei der Analyse des technischen Systems.

Eine solche Rahmenbedingung kann eine zusätzliche Bedingung hinsichtlich elektromagnetischer Verträglichkeit einer elektrischen Schaltung sein, die ebenfalls in Form eines Fehlerbaums beschrieben wird und der Gesamtfehlerbeschreibung in Form eines Ergänzungsfehlerbaums zugeführt wird.

Die Erfindung kann sowohl in Software als auch in Hardware realisiert werden.

Die oben beschriebenen Weiterbildungen gelten sowohl für das Verfahren, die Anordnung, das Computerprogramm-Element als auch für das computerlesbare Speichermedium.

Ausführungsbeispiele der Erfindung sind in den Figuren dargestellt und werden im weiteren näher erläutert:

Es zeigen

| | |
|---|---|
| Figur | 1 eine Anordnung mit einem Prozessor und einem Speicher zur Durchführung des Verfahrens; |
| Figur | 2 ein Ablaufdiagramm, in dem einzelne Verfahrensschritte des Verfahrens gemäß den Ausführungsbeispielen dargestellt ist; |
| Figur | 3 ein weiteres Ablaufdiagramm, in dem einzelne Verfahrensschritte der Ausführungsbeispiele dargestellt sind; |
| Figur | 4 eine Schaltungsanordnung, anhand der die Ausführungsbeispiele dargestellt werden; |
| Figur 5a und 5b | eine Darstellung zweier Fehlerbäume für einen elektrischen Widerstand; |
| Figuren | 6a und 6b eine Darstellung zweier Fehlerbäume für einen Transistor in Emitterschaltung; |
| Figuren | 7a und 7b eine Darstellung zweier Fehlerbäume für einen elektrischen Kondensator; |
| Figuren 8a und 8b | eine Darstellung zweier Fehlerbäume für eine elektrische Spule; |
| Figuren 9a und 9b | eine Darstellung zweier Fehlerbäume für einen allgemeinen Block, der ein elektrisches Element |

mit mehreren Eingängen und einem Ausgang repräsentiert;

Figuren 10a bis 10d — eine Darstellung zweier Elementenfehlerbäume eines UND-Gatters;

Figuren 11 — eine Darstellung eines Gesamtfehlerbaums der Schaltungsanordnung aus Figur 4,

Figur 12 — eine Darstellung eines verfeinerten Gesamtfehlerbaums der Schaltungsanordnung aus Figur 4;

Figur 13 — eine Skizze einer Schaltungsanordnung, anhand der das zweite Ausführungsbeispiel dargestellt wird;

Figuren — 14a bis 14d eine Darstellung von vier Fehlerbäumen zur Beschreibung des zweiten Ausführungsbeispiels;

Figur 15 — eine Skizze von vier Nicht-UND-Gattern, die gemeinsam auf einem Chip realisiert sind;

Figur 16 — eine Skizze von zwei Optokoppler-Schaltungen, die gemeinsam auf einem Chip realisiert sind;

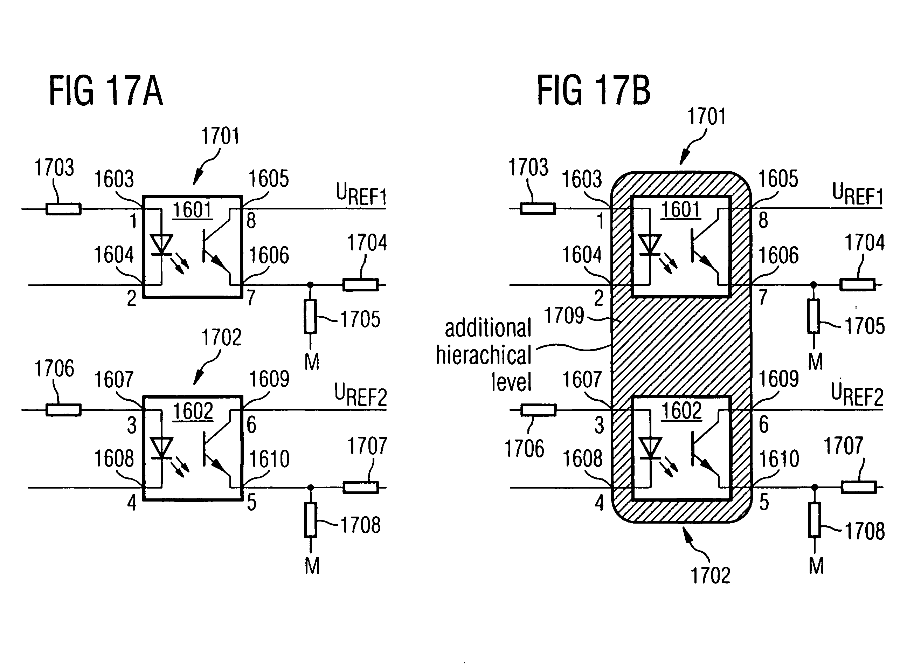

Figuren — 17A und 17B eine Skizze zweier voneinander unabhängig betrachteter Schaltungen, die jeweils eine Optokoppler-Schaltung aufweisen (Figur 17A) und Skizze zweier zu einem Block zusammengefasst betrachteter Schaltungen, die jeweils eine Optokoppler-Schaltung aufweisen (Figur 17B);

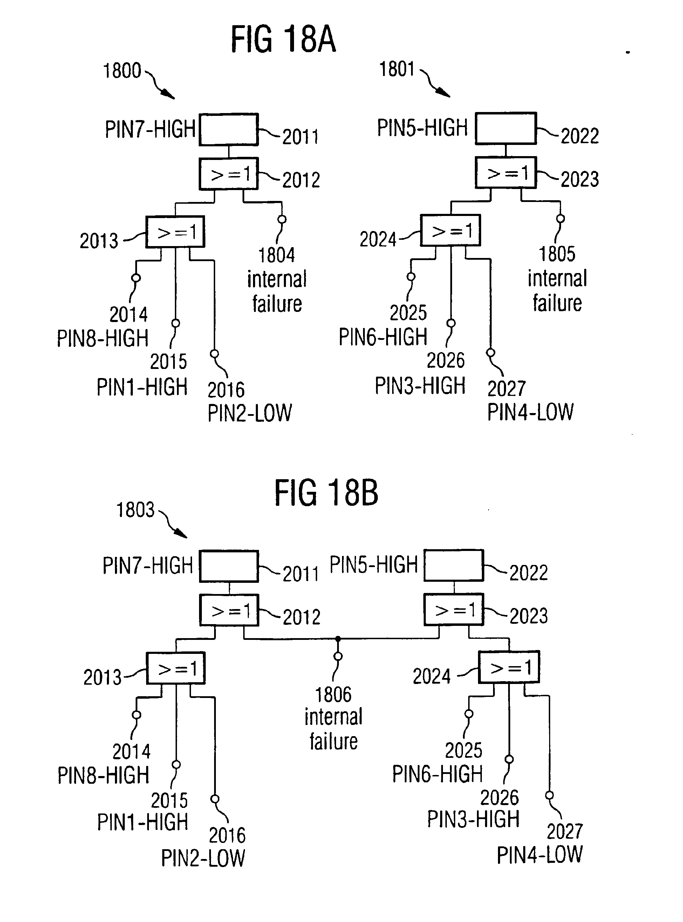

Figuren — 18A und 18B eine Darstellung eines Gesamtfehlerbaums der Schaltungsanordnung aus Figur 17A (Figur 18A) und eine Darstellung eines Gesamtfehlerbaums der Schaltungsanordnung aus Figur 17B (Figur 18B);

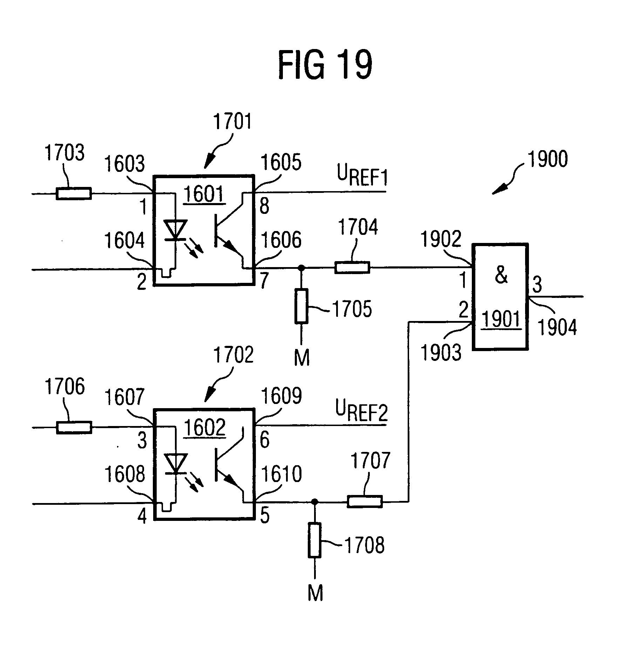

Figur 19 — eine Schaltungsanordnung mit den zwei Optokopplern gemäß Figur 17A und Figur 17B und einem an den jeweiligen Spannungsteiler jeweils angeschlossenen UND-Gatter; und

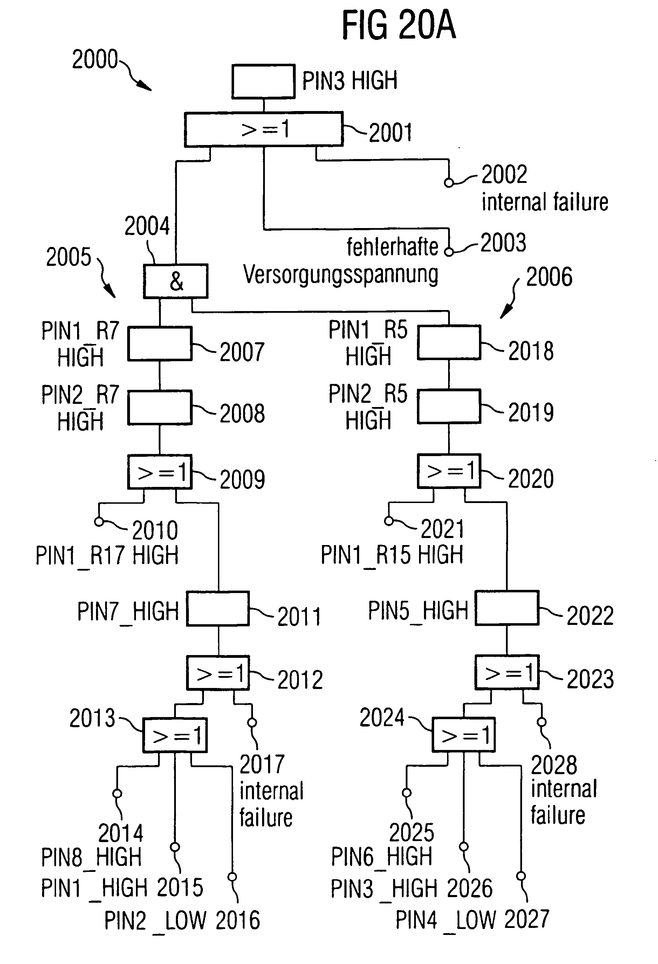

Figuren — 20A und 20B eine Darstellung eines Gesamtfehlerbaums der Schaltungsanordnung aus Figur 19 für den Fall, dass kein Gruppen-Fehlerbaum berücksichtigt wird (Figur 20A) und für den Fall, dass für die beiden Optokoppler der Gruppen-Fehlerbaum gemäß Figur 18B eingefügt ist.

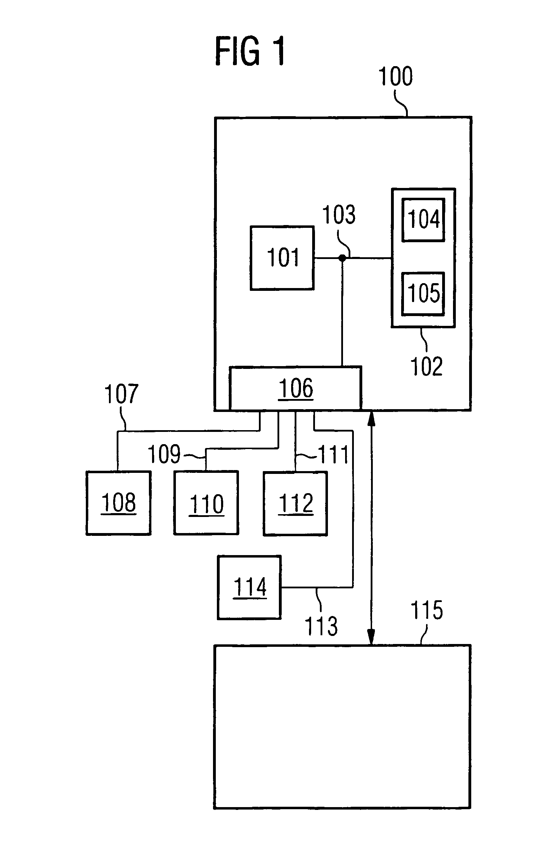

**Fig.1** zeigt einen Computer 100, mit dem die im weiteren beschriebenen Verfahren durchgeführt werden. Der Computer 100 weist einen Prozessor 101 auf, der mit einem Speicher 102 über einen Bus 103 verbunden ist. In dem Speicher 102 ist das Programm 104 gespeichert, das ausgeführt wird zur Durchführung der im weiteren beschriebenen Verfahren. Weiterhin ist in dem Speicher 102 eine Systembeschreibung 105 gespeichert, die ein zu untersuchendes technisches System 115 beschreibt.

In den im weiteren beschriebenen Ausführungsbeispiele wird als technisches System 115 eine elektrische Schaltung beschrieben. In diesem Fall ist in dem Speicher 102 eine Netzliste 105 gespeichert, die die einzelnen Elemente der elektrischen Schaltung beschreibt sowie deren Verbindungen untereinander und die Informationsflussrichtung, d.h. eine Information darüber, wie sich elektrische Signale innerhalb der elektrischen Schaltung ausbreiten.

Weiterhin umfasst der Computer eine Eingangs-/Ausgangsschnittstelle 106, die ebenfalls über den Bus 103 sowohl mit dem Speicher 102 als auch mit dem Prozessor 101 verbunden ist.

Die Eingangs-/Ausgangsschnittstelle 106 ist über eine erste Verbindung 107 mit einem externen Speichermedium 108, zum Beispiel eine CD-ROM oder einem Diskettenlaufwerk verbunden. Über eine zweite Verbindung 109 ist der Computer 100 mit einer Tastatur 110 verbunden. Über eine dritte Verbindung 111 ist der Computer 100 mit einer Computermaus 112 verbunden.

Eine vierte Verbindung 113 verbindet einen Bildschirm 114 mit der Eingangs-/Ausgangsschnittstelle 106.

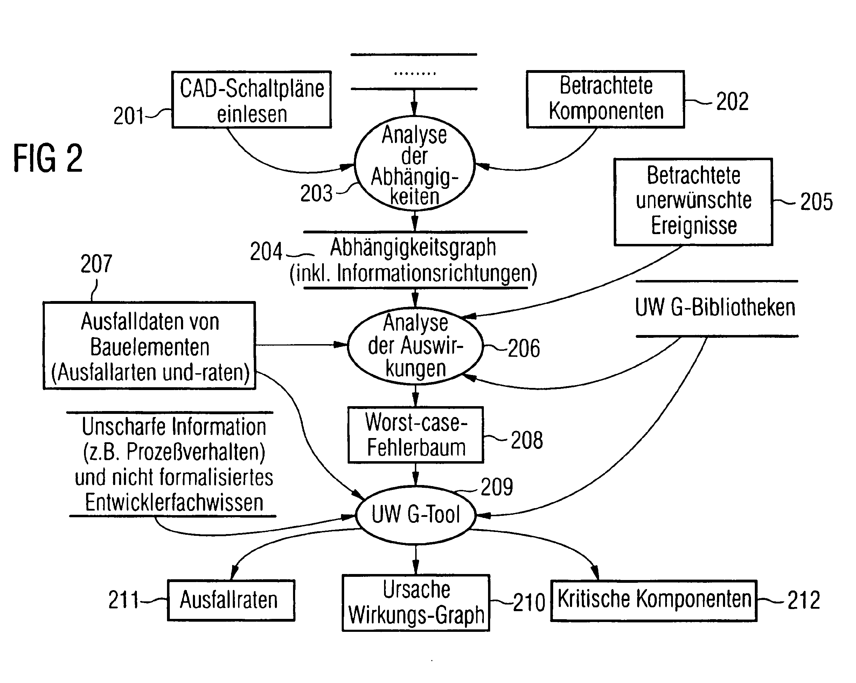

**Fig.2** zeigt eine Skizze, die das prinzipielle Vorgehen gemäß den im weiteren beschriebenen Ausführungsbeispielen darstellt. In einem ersten Schritt (Schritt 201) wird ein CAD-Schaltplan einer zu untersuchenden elektrischen Schaltung in den Speicher 102 des Computers 100 eingelesen. Der Schaltplan liegt in durch den Computer 100 verarbeitbarer elektronischer Form vor, in den Ausführungsbeispielen in Form einer Netzliste der Schaltungsstrukturbeschreibungssprache EDIF. Die Netzlisten enthalten Informationen über die in der elektrischen Schaltung enthaltenen elektrischen Bauelemente, im weiteren als Elemente der elektrischen Schaltung bezeichnet, sowie deren Verbindungen miteinander und Informationen über die Ausbreitung der Information innerhalb der elektrischen Schaltung, das heißt der Ausbreitung elektrischer Signale innerhalb der Schaltung.

In dem Speicher 102 sind ferner vorgegebene Fehlerbäume vorgegebener Elemente 202 einer elektrischen Schaltung gespeichert. Fehlerbäume verschiedener elektrischer Schaltungskomponenten (Bauelementen) werden im weiteren detailliert beschrieben. Jeder Fehlerbaum ist einem Referenzelement einer elektrischen Schaltung zugeordnet.

Durch die Fehlerbeschreibung werden mögliche Fehler des jeweiligen Referenzelements beschrieben, wie im weiteren noch näher erläutert wird. Einzelnen Elementen sind jeweils auch Ausfalldaten 207, das heißt Ausfallwahrscheinlichkeiten, zugeordnet, mit denen die Fehlerwahrscheinlichkeit des jeweiligen Referenzelements beschrieben wird.

Ferner sind in dem Speicher 102 vorgegebene Gruppen-Fehlerbäume vorgegebener Elementengruppen von Elementen 202 einer elektrischen Schaltung gespeichert. Gruppen-Fehlerbäume verschiedener elektrischer Schaltungskomponenten (Bauelementen) werden im weiteren detailliert beschrieben. Jeder Gruppen-Fehlerbaum ist allen Referenzelementen einer Referenzelementengruppe einer elektrischen Schaltung zugeordnet. Durch die Gruppen-Fehlerbeschreibung werden mögliche Fehler der jeweiligen Referenzelemente einer Referenzelementengruppe beschrieben, wie im weiteren noch näher erläutert wird. Einzelnen Elementengruppen sind jeweils auch Gruppen-Ausfalldaten, das heißt Ausfallwahrscheinlichkeiten, zugeordnet, mit denen die Fehlerwahrscheinlichkeit eines Referenzelements einer jeweiligen Referenzelementengruppe beschrieben wird.

Die Gruppierung der Elemente zu Elementengruppen und damit die Gruppierung von Referenzelementen zu Referenzelementengruppen erfolgt gemäß diesem Ausführungsbeispiel derart, dass gemeinsam auf einem Chip realisierte gleichartige Elemente, denen jedoch unterschiedliche Anschlüsse zugeordnet sind, zu einer Referenzelementengruppe gruppiert sind. Da die Elemente in einer Netzliste vorliegen, wird die Netzliste somit auf gleiche Bauelementbezeichnungen hin analysiert und die Elemente gleichen Typs werden jeweils zu einer Elementengruppe gruppiert, für die eine Referenzelementengruppe gebildet wird.

In einem weiteren Schritt (Schritt 203) werden die Abhängigkeiten der einzelnen Elemente auf mögliche auftretende Fehler innerhalb der elektrischen Schaltung sowie die Abhängigkeiten einzelner Elemente einer Elementengruppe auf mögliche auftretende Fehler innerhalb der elektrischen Schaltung, beispielsweise auf möglicherweise auftretende Fehler in einem Chip, in dem die Elemente einer Elementengruppe realisiert sind, ermittelt und es wird ein Abhängigkeitsgraph (204) bestimmt.

In einem Schritt (Schritt 205) wird von einem Benutzer zur Ermittlung eines Gesamtfehlerbaums ein unerwünschtes Ereignis vorgegeben.

Zur Ermittlung des Gesamtfehlerbaums für das jeweils betrachtete unerwünschte Ereignis werden für die elektrische Schaltung in einem Analyseschritt (Schritt 206) die Auswirkungen möglicher Fehler der Elemente aufgrund vorgegebener Fehlerwahrscheinlichkeiten der einzelnen Elemente hinsichtlich unterschiedlicher Fehlerarten in Bezug des betrachteten vorgegebenen unerwünschten Ereignisses analysiert. Dabei werden zusätzlich die GruppenFehlerbeschreibungen der Elemente der berücksichtigten Elementengruppen berücksichtigt.

Ergebnis des Analyseschritts 206 ist der Gesamtfehlerbaum 208.

In einem weiteren Schritt (Schritt 209) wird der Fehlerbaum zu einem vereinfachten Fehlerbaum 210, der im weiteren als Ursache-Wirkungs-Graph bezeichnet wird, abgebildet.

Weiterhin wird eine Auftretenswahrscheinlichkeit 211 des betrachteten unerwünschten Ereignisses ermittelt.

Weiterhin werden unter Berücksichtigung der einzelnen Fehlerdaten der Elemente für die elektrische Schaltung besonders kritische Elemente 212 ermittelt, die ein besonderes Risiko für das betrachtete unerwünschte Ereignis aufweist.

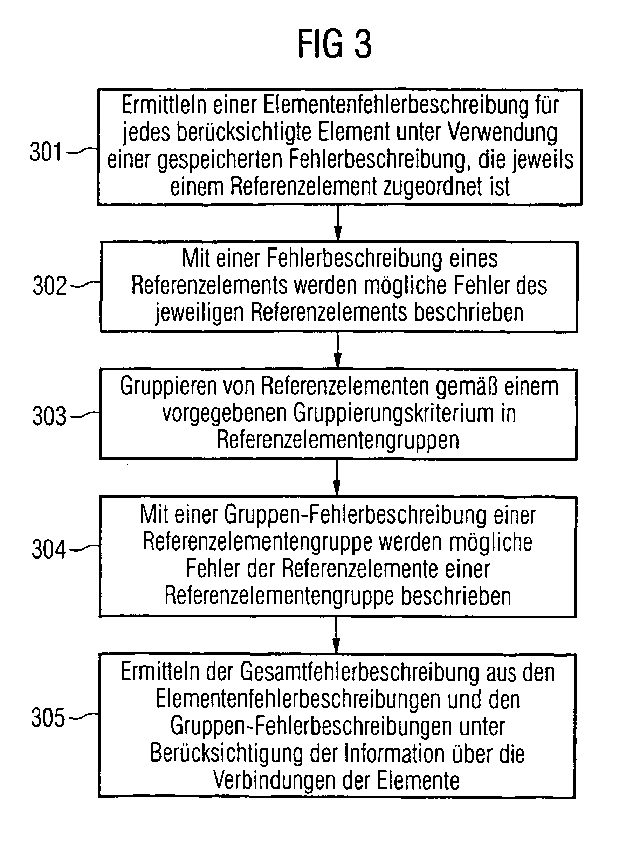

Wie in **Fig.3** dargestellt ist, wird in einem ersten Schritt (Schritt 301) für jedes berücksichtigte Element unter Verwendung einer gespeicherten Fehlerbeschreibung, die jeweils einem Referenzelement zugeordnet ist, eine Elementenfehlerbeschreibung ermittelt. Mit der Fehlerbeschreibung eines Referenzelements werden möglicher Fehler des jeweiligen Referenzelements beschrieben (Block 302).

Ferner wird in einem weiteren Schritt (Schritt 303) zumindest ein Teil der Referenzelemente gemäß einem vorgegebenen Gruppierungskriterium unter Verwendung einer gespeicherten Gruppen-Fehlerbeschreibung, die jeweils einer Referenzelementengruppe zugeordnet ist, in Referenzelementengruppen gruppiert (Schritt 303).

Mit der Gruppen-Fehlerbeschreibung einer Referenzelementengruppe werden möglicher Fehler der Referenzelemente einer Referenzelementengruppe, die sich vorzugsweise auf mehrere oder alle Referenzelemente der jeweiligen Referenzelementengruppe auswirken, beschrieben (Block 304).

Aus den Elementenfehlerbeschreibungen und den GruppenFehlerbeschreibungen werden unter Berücksichtigung der Informationen über die Verbindungen der Elemente die Gesamtfehlerbeschreibung hinsichtlich des vorgegebenen betrachteten unerwünschten Ereignisses 205 ermittelt (Schritt 305).

Im weiteren wird ein erstes Ausführungsbeispiel beschrieben, bei dem die Fehlerbeschreibung eines Referenzelements in Form eines Fehlerbaums des jeweiligen Referenzelements gespeichert ist.

Bei dem Verfahren gemäß dem ersten Ausführungsbeispiel wird die Verbindung der einzelnen Elemente der elektrischen Schaltung als Basis für die Erzeugung des Gesamtfehlerbaums zu dem jeweils vorgegebenen betrachteten unerwünschten Ereignisses 205 genutzt.

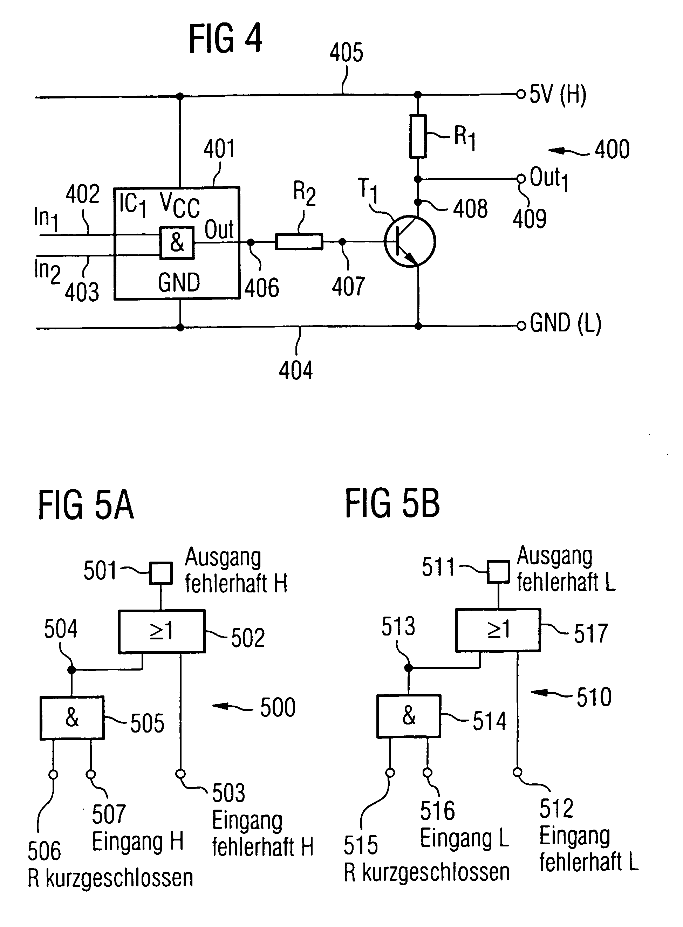

**Fig.4** zeigt eine einfache elektrische Schaltung 400. Die elektrische Schaltung 400 weist ein UND-Gatter 401 sowie einen ersten Widerstand $R_1$, einen zweiten Widerstand $R_2$ sowie einen npn-Bipolar-Transistor $T_1$ auf. Das UND-Gatter 401 weist zwei Eingänge 402, 403 auf, an die Eingangssignale $In_1$ und $In_2$ angelegt werden können. Weiterhin ist das UND-Gatter 401 mit einem Masseanschluss 404 und einem weiteren Anschluss 405 verbunden. Der weitere Anschluss 405 weist ein elektrisches Potential von 5 Volt auf. Ein Ausgang 406 des UND-Gatters 401 ist mit dem zweiten Widerstand $R_2$ verbunden. Der zweite Widerstand $R_2$ ist über eine zweiten Anschluss 407 mit dem Basisanschluss des Transistors $T_1$ verbunden. Der Emitteranschluss des Transistors $T_1$ ist mit dem Masseanschluss 404 verbunden. Der Kollektoranschluss 408 ist mit dem ersten Widerstand $R_1$ verbunden, der wiederum mit dem ersten Anschluss 405 verbunden ist. Mit dem Kollektoranschluss 408 ist auch ein Ausgang 409 der elektrischen Schaltung 400 verbunden, an dem ein Ausgangssignal $Out_1$ abgreifbar ist.

Im weiteren wird für verschiedene Referenzelemente der elektrischen Schaltung 400 jeweils ein Fehlerbaum für ein fehlerhaftes Ausgangssignale des jeweiligen Referenzelements beschrieben, jeweils für einen fehlerhaften High-Pegel (fehlerhaftes elektrisches Potential von 5 Volt, "H") bzw. einen fehlerhaften Low-Pegel (fehlerhaftes elektrisches Potential von 0 Volt, "L"), der an einem Ausgang des jeweils betrachteten Referenzelements anliegt. Die jeweiligen Fehlerbäume sind in dem Speicher 102 des Computers 100 gespeichert.

## Referenzelement elektrischer Widerstand

Die **Fig.5a** und **Fig.5b** zeigen zwei Fehlerbäume 500, 510, die für einen elektrischen Widerstand die Ursachen für einen fehlerhaften Signalpegel am Ausgang des Widerstandes beschreiben.

In **Fig.5a** ist für einen elektrischen Widerstand bei angenommenem fehlerhaften High-Pegel (H) am Ausgang des elektrischen Widerstandes 501 der Fehlerbaum 500 dargestellt. Ein fehlerhafter High-Pegel wird verursacht, wenn das Eingangssignal an dem Widerstand fehlerhafterweise einen High-Pegel aufweist 503 oder wenn der elektrische Widerstand zum einen kurzgeschlossen ist und der Eingang des elektrischen Widerstandes einen High-Pegel aufweist. Somit ergibt sich für den Fehlerbaum die Darstellung, dass der fehlerhafte High-Pegel am Ausgang 501 beschrieben werden kann durch die INKLUSIV-ODER-Verknüpfung 502 des Ereignisses, dass der Eingang des Widerstandes fehlerhaft einen High-Pegel aufweist 503 mit einem Verknüpfungsereignis 504. Das verursacht Verknüpfungsereignis 504 wird gebildet durch eine UND-Verknüpfung 505 der Ereignisse, dass der elektrische Widerstand kurzgeschlossen ist 506 und der Eingang des elektrischen Widerstandes einen High-Pegel aufweist 507.

**Fig.5b** beschreibt einen zweiten Fehlerbaum 510 für ein weiteres vorgegebenes unerwünschtes Ereignis, nämlich einem fehlerhaften Low-Pegel (L), der an dem Ausgang des elektrischen Widerstandes anliegt 511.

Ein solches unerwünschtes, fehlerhaftes Ereignis tritt auf bei einer INKLUSIV-ODER-Verknüpfung 517 eines ersten Ereignisses 512, nämlich das der Eingang des elektrischen Widerstandes fehlerhaft einen Low-Pegel aufweist mit einem zweiten Verknüpfungsereignis 513, welches sich durch UND-Verknüpfung 514 ergibt aus den Ereignissen, dass der elektrische Widerstand kurzgeschlossen ist 515 und dass an dem Eingang des elektrischen Widerstandes ein Low-Pegel anliegt 516.

## Referenzelement Transistor in Emitterschaltung

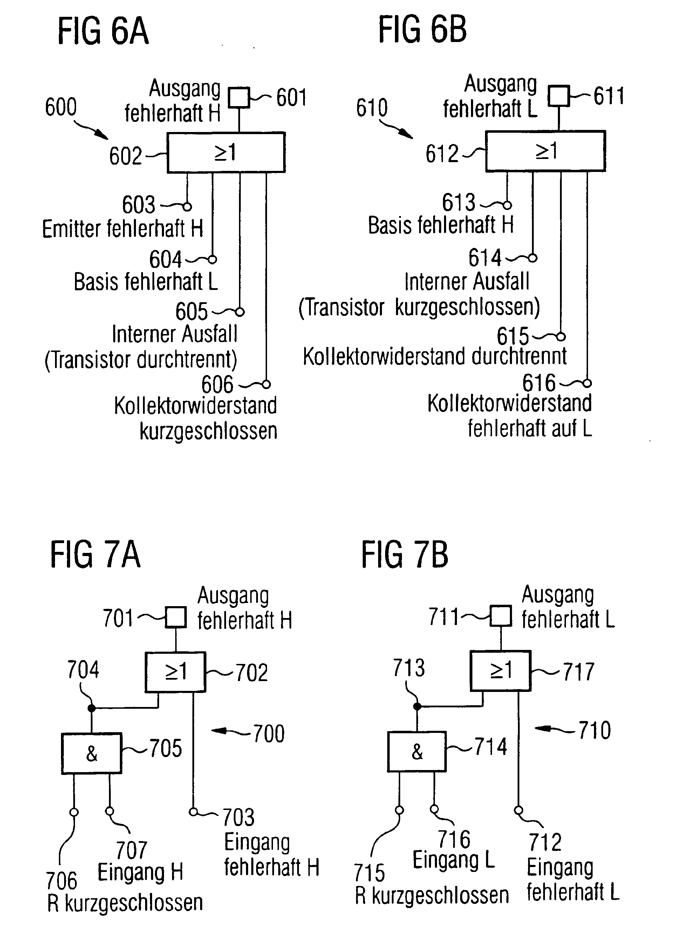

Die **Fig.6a** und **Fig.6b** zeigen zwei Fehlerbäume 600, 610 für einen npn-Bipolar-Transistor in Emitterschaltung. Ein erster Fehlerbaum 600 beschreibt die möglichen Ereignisse, die zu einem fehlerhaften High-Pegel am Ausgang des Transistors 601 führen.

Der fehlerhafte High-Pegel am Ausgang des Transistors (601) tritt auf bei einer INKLUSIV-ODER-Verknüpfung 602 folgender Ereignisse:

- An dem Emitteranschluss des Transistors liegt fehlerhaft ein High-Pegel an 603;
- an dem Basisanschluss des Transistors liegt fehlerhaft ein Low-Pegel an 604;
- der Transistor selbst ist kaputt, z.B. durchtrennt 605;
- der Kollektorwiderstand des Transistors ist kurzgeschlossen 606.

Der zweite Fehlerbaum 610 für den npn-Bipolar-Transistor zeigt mögliche Ursachen für einen fehlerhaften Low-Pegel am Ausgang des Transistors 611.

Der fehlerhafte Low-Pegel am Ausgang wird durch INKLUSIV-ODER-Verknüpfung 612 folgender Ereignisse vollständig beschrieben:

- Der Basisanschluss des Transistors weist fehlerhaft einen High-Pegel auf 613;
- der Transistor selbst ist kurzgeschlossen 614;
- der Kollektorwiderstand des Transistors ist durchtrennt 615;

- der Kollektorwiderstand des Transistors weist fehlerhaft einen Low-Pegel auf 616.

**Referenzelement elektrischer Kondensator**

Die **Fig.7a** und **Fig.7b** zeigen einen ersten Fehlerbaum 700 (vgl. **Fig.7a**) und einen zweiten Fehlerbaum 710 (vgl. **Fig.7b**) für einen elektrischen Kondensator als Referenzelement einer elektrischen Schaltung.

Die Fehlerbäume haben den gleichen Aufbau wie die Fehlerbäume 500, 510 für einen elektrischen Widerstand.

In **Fig.7a** ist für einen elektrischen Kondensator bei angenommenem fehlerhaften High-Pegel (H) am Ausgang des elektrischen Kondensator 701 der Fehlerbaum 700 dargestellt. Ein fehlerhafter High-Pegel wird verursacht, wenn das Eingangssignal an dem Kondensator fehlerhafterweise einen High-Pegel aufweist 703 oder wenn der elektrische Kondensator zum einen kurzgeschlossen ist <u>und</u> der Eingang des elektrischen Kondensators einen High-Pegel aufweist. Somit ergibt sich für den Fehlerbaum die Darstellung, dass der fehlerhafte High-Pegel am Ausgang 701 beschrieben werden kann durch die INKLUSIV-ODER-Verknüpfung 702 des Ereignisses, dass der Eingang des Widerstandes fehlerhaft einen High-Pegel aufweist 703 mit einem Verknüpfungsereignis 704. Das Verknüpfungsereignis 704 wird gebildet durch eine UND-Verknüpfung 705 der Ereignisse, dass der elektrische Kondensator kurzgeschlossen ist 706 <u>und</u> der Eingang des elektrischen Kondensators einen High-Pegel aufweist 707.

**Fig.7b** beschreibt einen zweiten Fehlerbaum 710 für ein weiteres vorgegebenes unerwünschtes Ereignis, nämlich einem fehlerhaften Low-Pegel (L), der an dem Ausgang des elektrischen Kondensators anliegt 711.

Ein solches unerwünschtes, fehlerhaftes Ereignis tritt auf bei einer INKLUSIV-ODER-Verknüpfung 717 eines ersten Ereignisses 712, nämlich das der Eingang des elektrischen Widerstandes fehlerhaft einen Low-Pegel aufweist mit einem zweiten Verknüpfungsereignis 713, welches sich durch UND-Verknüpfung 714 ergibt aus den Ereignissen, dass der elektrische Kondensator kurzgeschlossen ist 715 <u>und</u> dass an dem Eingang des elektrischen Kondensators ein Low-Pegel anliegt 716.

**Referenzelement elektrische Spule**

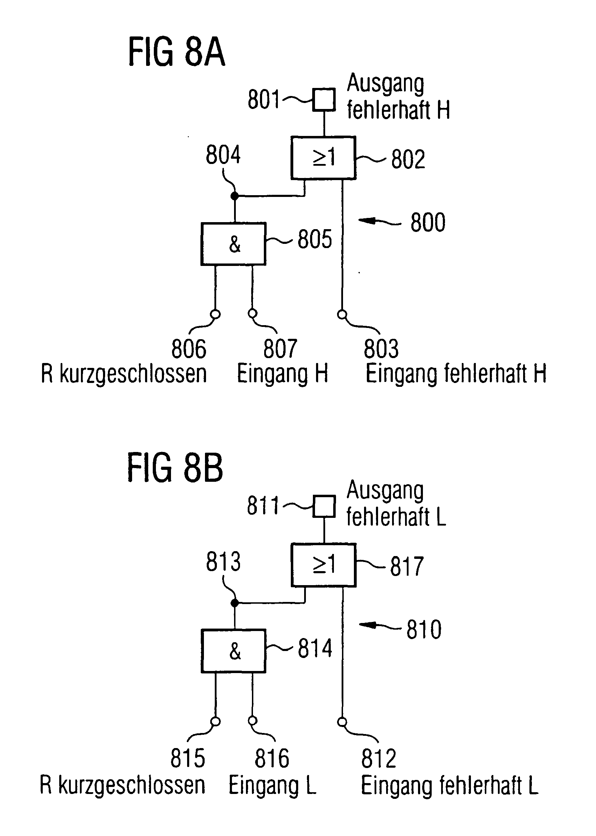

Die **Fig.8a** und **Fig.8b** zeigen einen ersten Fehlerbaum 800 (vgl. **Fig.8a**) sowie einen zweiten Fehlerbaum 810 (vgl. **Fig.8b**) für eine elektrische Spule.

Die Fehlerbäume haben den gleichen Aufbau wie die Fehlerbäume 500, 510 für einen elektrischen Widerstand.

In **Fig.8a** ist für einen elektrischen Kondensator bei angenommenem fehlerhaften High-Pegel (H) am Ausgang der elektrischen Spule 801 der Fehlerbaum 800 dargestellt. Ein fehlerhafter High-Pegel wird verursacht, wenn das Eingangssignal an der Spule fehlerhafterweise einen High-Pegel aufweist 803 oder wenn die elektrische Spule zum einen kurzgeschlossen ist <u>und</u> der Eingang der elektrischen Spule einen High-Pegel aufweist. Somit ergibt sich für den Fehlerbaum die Darstellung, dass der fehlerhafte High-Pegel am Ausgang 801 beschrieben werden kann durch die INKLUSIV-ODER-Verknüpfung 802 des Ereignisses, dass der Eingang des Widerstandes fehlerhaft einen High-Pegel aufweist 803 mit einem Verknüpfungsereignis 804. Das Verknüpfungsereignis 804 wird gebildet durch eine UND-Verknüpfung 805 der Ereignisse, dass die elektrische Spule kurzgeschlossen ist 806 <u>und</u> der Eingang der elektrischen Spule einen High-Pegel aufweist 807.

**Fig.8b** beschreibt einen zweiten Fehlerbaum 810 für ein weiteres vorgegebenes unerwünschtes Ereignis, nämlich einem fehlerhaften Low-Pegel (L), der an dem Ausgang der elektrischen Spule anliegt 811.

Ein solches unerwünschtes, fehlerhaftes Ereignis tritt auf bei einer INKLUSIV-ODER-Verknüpfung 817 eines ersten Ereignisses 812, nämlich das der Eingang der elektrischen Spule fehlerhaft einen Low-Pegel aufweist mit einem zweiten Verknüpfungsereignis 813, welches sich durch UND-Verknüpfung 814 ergibt aus den Ereignissen, dass die elektrische Spule kurzgeschlossen ist 815 <u>und</u> dass an dem Eingang der elektrischen Spule ein Low-Pegel anliegt 816.

**Referenzelement allgemeiner Block mit n-Eingängen und einem Ausgang**

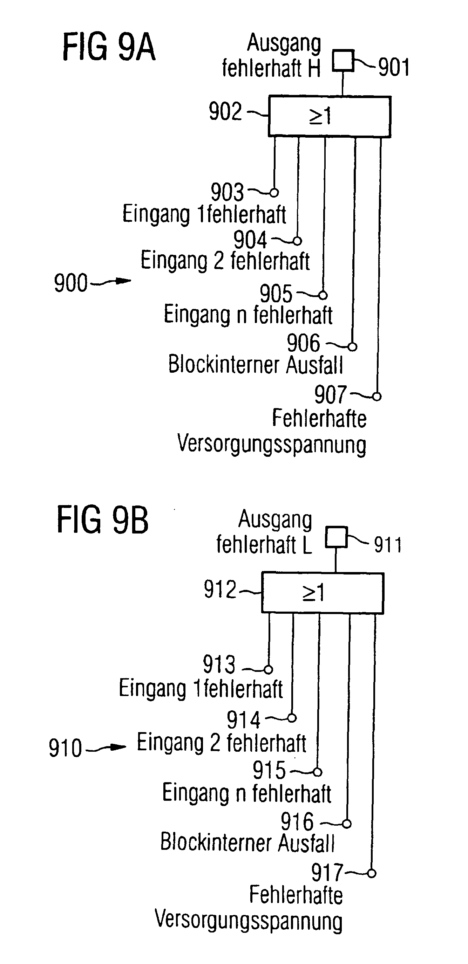

Die **Fig.9a** und **Fig.9b** zeigen einen ersten Fehlerbaum 900 (vgl. **Fig.9a**) und einen zweiten Fehlerbaum 910 (vgl. **Fig.9b**) für einen Block mit beliebigem internen Verhalten, der lediglich durch das Verhalten an den Anschlüssen des Blocks beschrieben wird. Der Block weist n (n = 1 ... ∞) Anschlüsse auf.

Ein fehlerhafter High-Pegel am Ausgang des Blocks 901 tritt auf bei INKLUSIV-ODER-Verknüpfung 902 folgender Ereignisse (vgl. erster Fehlerbaum 900):

- Ein erster Eingang des Blocks weist einen fehlerhaften Pegel auf 903;
- ein zweiter Eingang des Blocks weist einen fehlerhaften Pegel auf 904;
- ... ;
- Eingang n des Blocks weist einen fehlerhaften Pegel auf 905;
- der Block selbst weist ein fehlerhaftes Verhalten auf, d.h. es ist ein blockinterner Ausfall gegeben 906;

- die Versorgungsspannung, die an dem Block anliegt, ist fehlerhaft 907.

Ein am Ausgang fehlerhafter Low-Pegel 911 wird verursacht durch folgende INKLUSIV-ODER-Verknüpfung 912 folgender Ereignisse, die in dem zweiten Fehlerbaum 910 dargestellt sind:

- Ein erster Eingang ist fehlerhaft 913;
- Ein zweiter Eingang ist fehlerhaft 914;
- ...;
- Eingang n ist fehlerhaft 915;
- ein blockinterner Ausfall tritt auf 916;
- die Versorgungsspannung ist fehlerhaft 917.

**Referenzelement UND-Gatter**

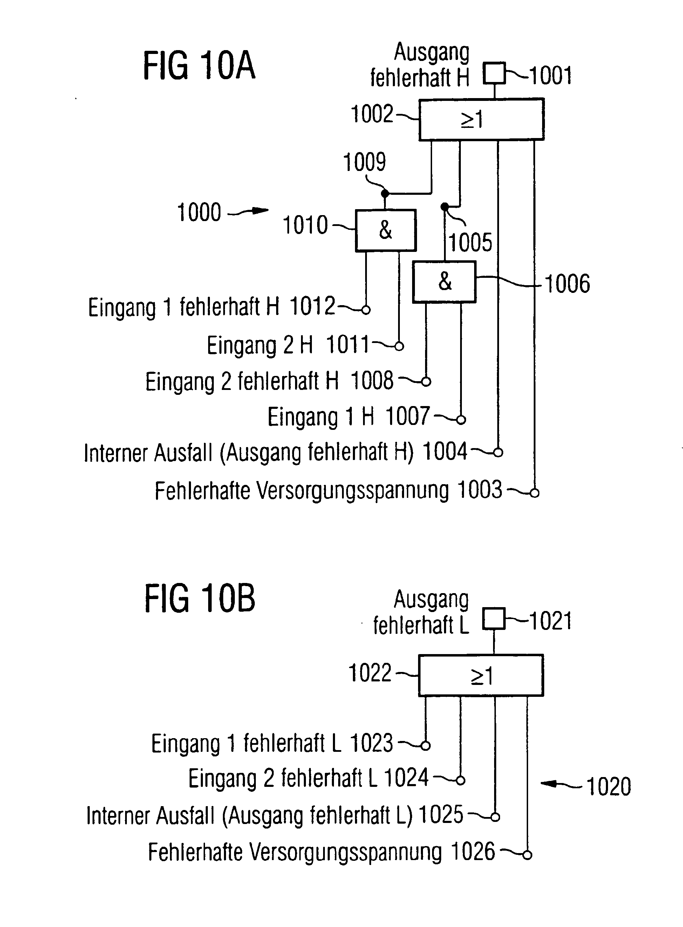

Die **Fig.10a** und Fig.10b zeigen einen ersten Fehlerbaum 1000 (vgl. **Fig.10a**) sowie einen zweiten Fehlerbaum 1020 (vgl. **Fig.10b**) für ein UND-Gatter.
Der erste Fehlerbaum 1000 beschreibt die Ereignisse, die zu einem fehlerhaften High-Pegel am Ausgang des UND-Gatters führen 1001.
Ein solcher fehlerhafter High-Pegel am Ausgang 1001 ergibt sich bei INKLUSIV-ODER-Verknüpfung 1002 folgender Ereignisse:

- Eine fehlerhafte Versorgungsspannung 1003;
- ein interner Ausfall des UND-Gatters (der Ausgang des UND-Gatters weist fehlerhaft einen High-Pegel auf) 1004;
- ein erstes Zwischenereignis 1005 das sich ergibt aus einer ersten UND-Verknüpfung 1006 der Ereignisse, dass der erste Eingang des UND-Gatters einen High-Pegel aufweist 1007 und der zweite Eingang des UND-Gatters fehlerhaft einen High-Pegel aufweist 1008;
- ein zweites Zwischenereignis 1009 das sich ergibt aus einer UND-Verknüpfung 1010 der Ereignisse, dass der zweite Eingang einen High-Pegel aufweist 1011 und dass der erste Eingang fehlerhaft einen High-Pegel aufweist 1012.

Der zweite Fehlerbaum 1020 beschreibt die Ursachen, die zu einem fehlerhaften Low-Pegel am Ausgang des UND-Gatters 1021 führen.
Ein fehlerhafter Low-Pegel am Ausgang des UND-Gatters ergibt sich durch INKLUSIV-ODER-Verknüpfung 1022 folgender Ereignisse:

- Der erste Eingang weist fehlerhaft einen Low-Pegel auf 1023;
- der zweite Eingang des UND-Gatters weist fehlerhaft einen Low-Pegel auf 1024;
- das UND-Gatter selbst ist kaputt, das heißt, der Ausgang des UND-Gatters weist fehlerhaft einen Low-Pegel auf 1025;
- die Versorgungsspannung ist fehlerhaft 1026.

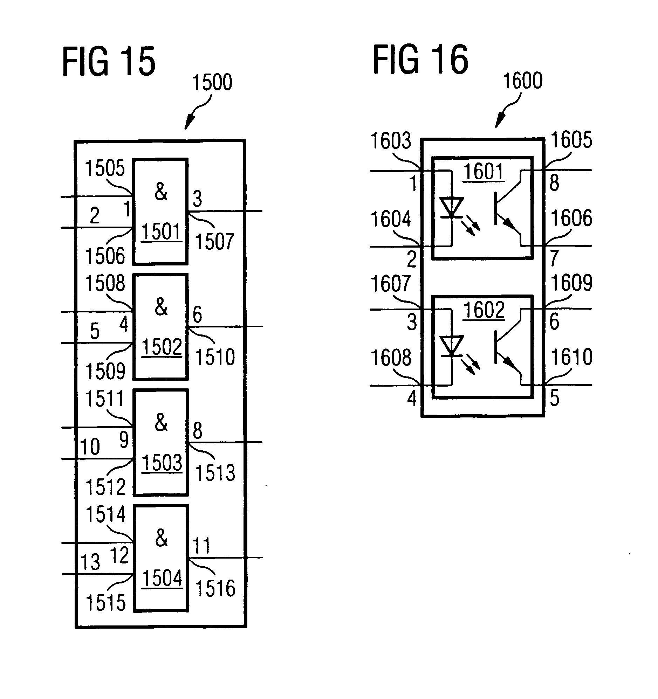

**Fig.15** zeigt vier Nicht-UND-Gatter 1501, 1502, 1503, 1504, die gemeinsam auf einem Chip 1500, beispielsweise dem Chip 74VHC00, realisiert sind. Das erste Nicht-UND-Gatter 1501 weist einen ersten Eingangsanschluss 1505, einen zweiten Eingangsanschluss 1506 und einen ersten Ausgangsanschluss 1507 auf. Das zweite Nicht-UND-Gatter 1502 weist einen dritten Eingangsanschluss 1508, einen vierten Eingangsanschluss 1509 und einen zweiten Ausgangsanschluss 1510 auf. Das dritte Nicht-UND-Gatter 1503 weist einen fünften Eingangsanschluss 1511, einen sechsten Eingangsanschluss 1512 und einen dritten Ausgangsanschluss 1513 auf. Das vierte Nicht-UND-Gatter 1504 weist einen siebten Eingangsanschluss 1514, einen achten Eingangsanschluss 1515 und einen vierten Ausgangsanschluss 1516 auf.
Die einzelnen Nicht-UND-Gatter 1501, 1502, 1503, 1504 werden gemäß diesem Ausführungsbeispiel zu einer Gruppe gruppiert und es wird ein Gruppen-Fehlerbaum erstellt, der die möglichen Fehlerzusammenhänge beschreibt, die bestehen bei Auftreten eines Fehlers auf dem Chip 1500.
Der Gruppen-Fehlerbaum wird gespeichert und in den Gesamtfehlerbaum eingebunden, wenn eines der Nicht-UND-Gatter 1501, 1502, 1503, 1504 in der Gesamtfehlerbeschreibung berücksichtigt wird.
**Fig.16** zeigt eine elektrische Schaltung mit einem ersten Optokoppler 1601 und einem zweiten Optokoppler 1602, die ebenfalls beide gemeinsam auf einem Chip 1600 integriert sind, gemäß diesem Ausführungsbeispiel auf dem Chip ILD217.
Der erste Optokoppler 1601 weist einen ersten Eingangsanschluss 1603 und einen zweiten Eingangsanschluss 1604 auf sowie einen ersten Ausgangsanschluss 1605 und einen zweiten Ausgangsanschluss 1606. Der zweite Optokoppler 1602 weist einen dritten Eingangsanschluss 1607 und einen vierten Eingangsanschluss 1608 auf sowie einen dritten Ausgangsanschluss 1609 und einen vierten Ausgangsanschluss 1610.

Die einzelnen Optokoppler 1601 und 1602 werden gemäß diesem Ausführungsbeispiel zu einer Gruppe gruppiert und es wird ein Gruppen-Fehlerbaum erstellt, der die möglichen Fehlerzusammenhänge beschreibt, die bestehen bei Auftreten eines Fehlers auf dem Chip 1600.

Der Gruppen-Fehlerbaum wird gespeichert und in den Gesamtfehlerbaum eingebunden, wenn einer der Optokoppler 1601 und 1602 in der Gesamtfehlerbeschreibung berücksichtigt wird.

**Fig.17A** zeigt zur weiteren Erläuterung eine erste Optokopplerschaltung 1701 und eine zweite Optokopplerschaltung 1702, die beide auf dem Optokoppler-Chip 1600 gemäß **Fig.16** realisiert sind, jedoch als voneinander unabhängige Schaltungskomponenten betrachtet werden.

Die erste Optokopplerschaltung 1701 weist einen ersten elektrischen Widerstand 1703 auf, der an den ersten Eingangsanschluss 1603 angeschlossen ist. An den zweiten Ausgangsanschluss 1606 ist ein erster Spannungsteiler angeschlossen mit einem zweiten elektrischen Widerstand 1704 und einem dritten elektrischen Widerstand 1705.

Die zweite Optokopplerschaltung 1702 weist einen vierten elektrischen Widerstand 1706 auf, der an den dritten Eingangsanschluss 1607 angeschlossen ist. An den vierten Ausgangsanschluss 1610 ist ein zweiter Spannungsteiler angeschlossen mit einem fünften elektrischen Widerstand 1707 und einem sechsten elektrischen Widerstand 1708.

In **Fig.18a** ist für die erste Optokopplerschaltung 1701 aus **Fig.17A** bei angenommenem fehlerhaften High-Pegel (H) am zweiten Ausgangsanschluss 1606 ein erster Fehlerbaum 1800 dargestellt sowie für die zweite Optokopplerschaltung 1702 bei angenommenem fehlerhaften High-Pegel (H) am vierten Ausgangsanschluss 1610 ein zweiter Fehlerbaum 1801. Der erste und der zweite Fehlerbaum beschreiben die Fehler bei voneinander unabhängig betrachteten, d.h. nicht korrelierten Eingangssignalen und Signalverläufen.

Ein fehlerhafter High-Pegel am zweiten Ausgangsanschluss 1606 wird verursacht, wenn ein interner Fehler in dem ersten Optokoppler 1601 aufgetreten ist oder an mindestens einem der folgenden Anschlüsse ein fehlerhafter Pegel anliegt:

- an dem ersten Ausgangsanschluss 1605 ein fehlerhafter High-Pegel,
- an dem ersten Eingangsanschluss 1603 ein fehlerhafter High-Pegel,
- an dem zweiten Eingangsanschluss 1604 ein fehlerhafter Low-Pegel.

Ein fehlerhafter High-Pegel am vierten Ausgangsanschluss 1610 wird verursacht, wenn ein interner Fehler in dem zweiten Optokoppler 1602 aufgetreten ist oder an mindestens einem der folgenden Anschlüsse ein fehlerhafter Pegel anliegt:

- an dem dritten Ausgangsanschluss 1609 ein fehlerhafter High-Pegel,
- an dem dritten Eingangsanschluss 1607 ein fehlerhafter High-Pegel,
- an dem vierten Eingangsanschluss 1608 ein fehlerhafter Low-Pegel.

**Fig.17B** zeigt zur Erläuterung die Optokopplerschaltungen 1701 und 1702 aus **Fig.17A,** wobei die beiden Optokoppler 1601 und 1602 zu einer Optokoppler-Gruppe 1709 gruppiert sind, da beide Optokoppler 1601 und 1602 gemeinsam in einem Chip integriert sind und somit ein Fehler in dem Chip Auswirkungen auf beide Optokoppler 1601 und 1602 haben kann.

Entsprechend zeigt **Fig.18B** den Gruppen-Fehlerbaum für die Optokoppler-Gruppe 1709 gemäß **Fig.17B.**

Der Gruppen-Fehlerbaum 1803 weist im Wesentlichen die Komponenten des ersten Fehlerbaums 1801 und des zweiten Fehlerbaums 1802 auf mit dem Unterschied, dass der Fehlerfall, dass die Fehlerfälle "interner Fehler in dem ersten Optokoppler 1601" 1804 und "interner Fehler in dem zweiten Optokoppler 1602" 1805 zusammengefasst sind zu einem Gruppen-Fehlerfall "interner Fehler in dem Optokoppler-Chip 1600" 1806.

Auf diese Weise wird anschaulich eine weitere Fehler-Hierarchieebene eingeführt, mit der eine weiter verbesserte Fehleranalyse ermöglicht wird.

Diese Vorgehensweise wird entsprechend auf die formelbasierte Fehlerbeschreibung, wie sie im Weiteren detailliert erläutert wird, übertragen durchgeführt.

Zur Ermittlung der Gesamtfehlerbeschreibung der elektrischen Schaltung gibt ein Benutzer ein unerwünschtes, zu betrachtendes Ereignis an einem durch den Benutzer vorgegebenen Anschluss vor. Im weiteren wird vorausgesetzt, dass ein fehlerhafter High-Pegel an dem Ausgang 409 der elektrischen Schaltung 400 als unerwünschtes Ereignis vorgegeben wird, das heißt, das Ausgangssignal $Out_1$ soll den Pegel von 5 Volt (High-Pegel) aufweisen.

Die Netzliste, die die Anordnung gemäß **Fig.4** beschreibt, wird durch einen geeigneten Parser auf die in der Schaltung enthaltenen Elemente hin untersucht. In einem weiteren Schritt wird überprüft, ob die entsprechenden Elemente als Referenzelemente in dem Speicher 102 schon gespeichert sind.

Im weiteren wird davon ausgegangen, dass dies für alle Elemente der in der in **Fig.4** dargestellten Schaltung enthalten sind, der Fall ist.

Nun wird in einer von dem Ausgang 409 rückwärts gerichteten Suche jeweils der für das betrachtete Element bzw. Referenzelement der entsprechende Fehlerbaum ermittelt und als Elementenfehlerbaum dem Gesamtfehlerbaum hinzugefügt. Ein sukzessives Vorgehen vom Ausgang 409 der elektrischen Schaltung 400 hin zu den Eingängen 402, 403 der elektrischen Schaltung 400 ermöglicht somit ein baukastenähnliches Zusammenstellen des Gesamtfehlerbaums, welches aufgrund der automatisierten Vorgehensweise durch den Computer zu einem beweisbar vollständigen Gesamtfehlerbaum führt. Das gewährleistet schließlich eine zuverlässige Beschreibung aller möglichen Fehler innerhalb der elektrischen Schaltung, die zu dem vorgegebenen ungewünschten Ereignis führen.

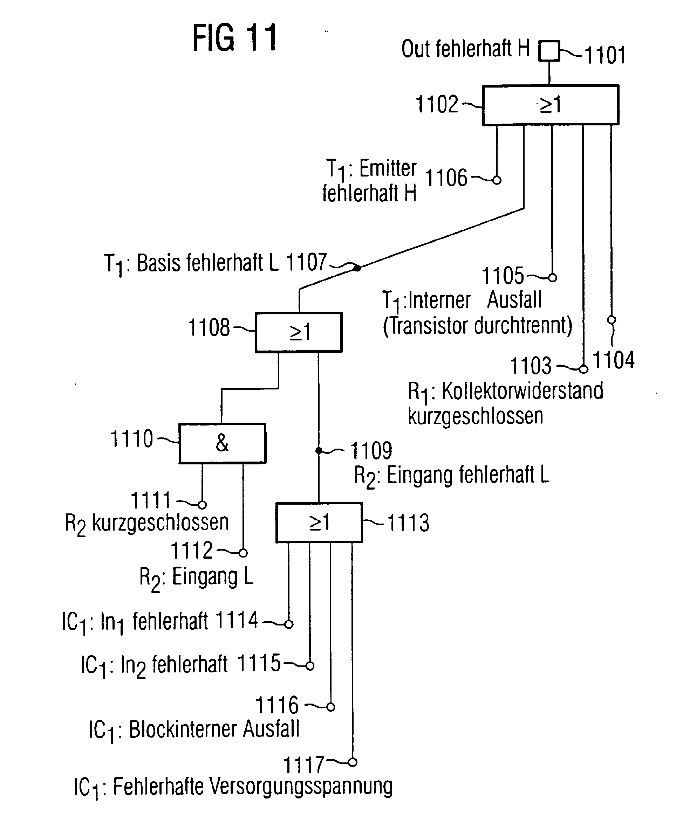

Ein sich gemäß dem oben beschriebenen ergebender Gesamtfehlerbaum für die in **Fig.4** dargestellte Schaltung ist in **Fig.11** dargestellt. Anhang dieser Darstellung wird das oben beschriebene Vorgehen noch einmal detailliert erläutert.

Das unerwünschte Ereignis 1101 ist durch den Benutzer als fehlerhafter High-Pegel des Ausgangssignals $Out_1$ vorgegeben.

Der fehlerhafte High-Pegel ergibt sich aufgrund einer INKLUSIV-ODER-Verknüpfung 1102 eines fehlerhaften High-Pegels, der durch den ersten elektrischen Widerstand $R_1$ verursacht wird oder durch einen fehlerhaften High-Pegel, der an dem Ausgang des Transistors $T_1$ anliegt. Aufgrund der gespeicherten Fehlerbäume für die Referenzelemente elektrischer Widerstand und npn-Bipolar-Transistor in Emitterschaltung ergibt sich unter der Voraussetzung, dass der Eingang des ersten elektrischen Widerstandes $R_1$ auf High-Pegel liegt, dass ein fehlerhafter High-Pegel am Ausgang des ersten elektrischen Widerstandes $R_1$ lediglich auftreten kann, wenn der erste elektrische Widerstand $R_1$ kurzgeschlossen ist 1103.

Durch Ermittlung des Elementenfehlerbaums für den Transistor $T_1$ aus dem ersten Fehlerbaum 600 des npn-Bipolar-Transistors in Emitterschaltung ergibt sich, dass das Ausgangssignal $Out_1$ fehlerhafterweise einen High-Pegel aufweist, wenn der Kollektorwiderstand des Transistors $T_1$ kurzgeschlossen ist 1104 <u>oder</u> der Transistor $T_1$ durchtrennt ist 1105 <u>oder</u> der Emitteranschluss des Transistors $T_1$ fehlerhafterweise einen High-Pegel aufweist 1106. Eine weitere Ursache für ein fehlerhaftes Ausgangssignal $Out_1$ mit High-Pegel ist, dass der Basisanschluss des Transistors fehlerhaft einen Low-Pegel aufweist 1107.

Aufgrund der in der Netzliste enthaltenen Strukturinformation ergibt sich nunmehr, dass ein fehlerhafter Low-Pegel an dem Basis-Anschluss des Transistors $T_1$ sich ergibt aufgrund einer INKLUSIV-ODER-Verknüpfung 1108, die sich ergibt aufgrund des zweiten Fehlerbaums 510 für einen elektrischen Widerstand, abgebildet auf den zweiten elektrischen Widerstand $R_2$ in der elektrischen Schaltung 400.

Der fehlerhafte Low-Pegel an dem Ausgang 407 des zweiten elektrischen Widerstandes $R_2$ tritt auf, wenn der zweite Anschluss 406 als Eingang des zweiten elektrischen Widerstandes $R_2$ fehlerhaft einen Low-Pegel aufweist 1109 <u>oder</u> bei Vorliegen einer UND-Verknüpfung 1110 folgender Ereignisse:

- Der zweite elektrische Widerstand $R_2$ ist kurzgeschlossen 1111;
- der zweite Anschluss 406 weist als Eingang des zweiten elektrischen Widerstandes $R_2$ einen Low-Pegel auf 1112. In der Netzliste ist ferner angegeben, dass der zweite Anschluss 406 auch gleichzeitig der Ausgang des UND-Gatters 401 der elektrischen Schaltung 400 ist. Somit hängt ein fehlerhafter Low-Pegel am Eingang des zweiten elektrischen Widerstandes $R_2$ von dem zweiten Fehlerbaum 1020 eines UND-Gatters ab, in diesem Fall von dem UND-Gatter 401 der elektrischen Schaltung 400.

Somit ergibt sich, dass sich ein fehlerhafter Low-Pegel an dem Eingang des zweiten elektrischen Widerstandes $R_2$ durch INKLUSIV-ODER-Verknüpfung 1113 folgender Ereignisse ergibt:

- Das erste Eingangssignal $In_1$ ist fehlerhaft 1114;
- das zweite Eingangssignal $In_2$ ist fehlerhaft 1115;
- das UND-Gatter 401 selbst ist kaputt 1116;
- die Versorgungsspannung für das UND-Gatter 401 ist fehlerhaft 1117.

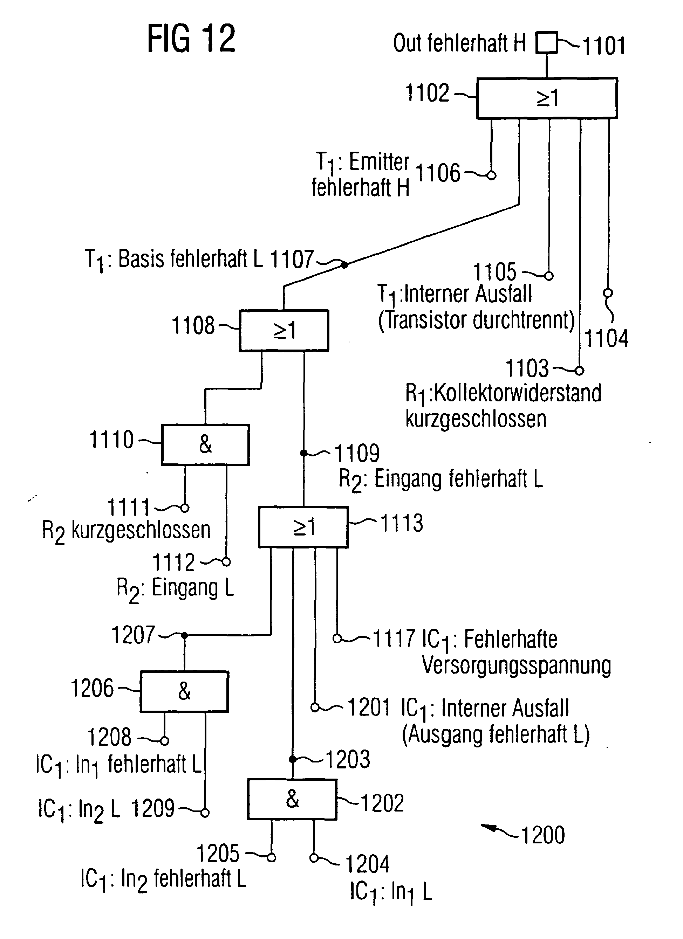

Durch direkte Berücksichtigung des zweiten Fehlerbaums für 1020 für ein UND-Gatter ergibt sich der in **Fig. 12** dargestellte verfeinerte Gesamtfehlerbaum 1200 für die elektrische Schaltung 40 in Bezug auf einen fehlerhaften High-Pegel an dem Ausgang 409 der elektrischen Schaltung 400.

In dem verfeinerten Fehlerbaum sind die in **Fig.11** und in **Fig.12** übereinstimmenden Elemente und Ereignisse mit gleichen Bezugszeichen versehen.

In verfeinerter Darstellung ergibt sich, dass der fehlerhafte Low-Pegel an dem Eingang des zweiten elektrischen Widerstands $R_2$ 1109 sich ergibt durch INKLUSIV-ODER-Verknüpfung 1113 folgender Ereignisse:

- Die Versorgungsspannung des UND-Gatters 401 ist fehlerhaft 1117;
- der Ausgang des UND-Gatters weist fehlerhaft einen Low-Pegel auf 1201;
- ein sich aufgrund einer ersten Transistor-UND-VERKNÜPFUNG 1202 ergebendes erstes Transistorzwischensignal 1203 weist einen High-Pegel auf, wenn das erste Eingangssignal $In_1$ einen Low-Pegel aufweist 1204 <u>und</u> das zweite Eingangssignal $In_2$ fehlerhaft einen Low-Pegel aufweist 1205;

- ein sich aufgrund einer zweiten Transistor-UND-Verknüpfung 1206 ergebendes zweites Transistorzwischensignal 1207 weist einen High-Pegel auf, wenn das erste Eingangssignal $In_1$ fehlerhaft einen Low-Pegel aufweist 1208 <u>und</u> das zweite Eingangssignal $In_2$ einen Low-Pegel aufweist 1209.

Damit ist der Gesamtfehlerbaum 1200 für die elektrische Schaltung hinsichtlich eines fehlerhaften Ausgangssignals $Out_1$ auf High-Pegel ermittelt.

Ist in der jeweiligen Schaltung ein Element einer Referenzelementengruppe enthalten, wird bei Erzeugen des Gesamtfehlerbaums entsprechend der jeweilige Gruppen-Fehlerbaum eingesetzt.

Der Fehlerbaum wird in dem Speicher 102 des Computers gespeichert und dem Benutzer auf Anfrage auf dem Bildschirm 114 dargestellt.

**Fig.19** zeigt eine weitere Schaltungsanordnung 1900, die die beiden Optokopplerschaltungen 1701, 1702 sowie ein UND-Gatter 1901 aufweisen. Ein erster Eingangsanschluss 1902 des UND-Gatters 1901 ist mit dem zweiten elektrischen Widerstand 1704 und ein zweiter Eingangsanschluss 1903 ist mit dem fünften elektrischen Widerstand 1707 gekoppelt. An einem Ausgangsanschluss 1904 des UND-Gatters 1901 liegt ein Ausgangssignal der weiteren Schaltungsanordnung 1900 an.

**Fig.20A** zeigt einen ersten Gesamtfehlerbaum 2000 der in **Fig.19** dargestellten weiteren Schaltungsanordnung 1900 für den Fall, dass lediglich die einzelnen Referenzelemente und die zugehörigen Fehlerbeschreibungen berücksichtigt werden.

In dem ersten Gesamtfehlerbaum 2000 ergibt sich, dass der fehlerhafte High-Pegel an dem Ausgangsanschluss 1904 des UND-Gatters 1901 sich ergibt durch INKLUSIV-ODER-Verknüpfung 2001 folgender Ereignisse:

- Das UND-Gatter selbst ist fehlerhaft 2002;
- die Versorgungsspannung ist fehlerhaft 2003;
- einer logischen UND-Verknüpfung 2004 einer ersten Ereigniskombination 2005 mit einer zweiten Ereigniskombination 2006.

Die erste Ereigniskombination ist eine UND-Verknüpfung folgender Ereignis:

- ein erster Anschluss des zweiten elektrischen Widerstands 1704, an dem der erste Eingangsanschluss 1902 des UND-Gatters 1901 angeschlossen ist, ist auf High-Pegel 2007;
- ein zweiter Anschluss des zweiten elektrischen Widerstands 1704, an dem der zweite Ausgangsanschluss 1606 des ersten Optokopplers 1601 angeschlossen ist, ist auf High-Pegel 2008;
- eine INKLUSIV-ODER-Verknüpfung 2009 folgender Ereignisse:

  - ein erster Anschluss des dritten elektrischen Widerstands 1705 ist auf High-Pegel 2010;
  - der zweite Ausgangsanschluss 1606 des ersten Optokopplers 1601 ist auf High-Pegel 2011 UND eine zweite INKLUSIV-ODER-Verknüpfung 2012 ist erfüllt.

Die zweite INKLUSIV-ODER-Verknüpfung 2012 ist erfüllt, wenn entweder eine dritte INKLUSIV-ODER-Verknüpfung 2013 der folgenden Ereignisse erfüllt ist:

- Der erste Ausgangsanschluss 1605 des ersten Optokopplers 1601 ist auf High-Pegel 2014;
- der erste Eingangsanschluss 1603 des ersten Optokopplers 1601 ist auf High-Pegel 2015;
- der zweite Eingangsanschluss 1604 des ersten Optokopplers 1601 ist auf Low-Pegel 2016;

oder
wenn der erste Optokoppler 1601 fehlerhaft ist 2017.

Die zweite Ereigniskombination 2006 ist eine UND-Verknüpfung folgender Ereignis:

- ein erster Anschluss des fünften elektrischen Widerstands 1707, an dem der zweite Eingangsanschluss 1903 des UND-Gatters 1901 angeschlossen ist, ist auf High-Pegel 2018;
- ein zweiter Anschluss des fünften elektrischen Widerstands 1707, an dem der vierte Ausgangsanschluss 1610 des zweiten Optokopplers 1602 angeschlossen ist, ist auf High-Pegel 2019;
- eine INKLUSIV-ODER-Verknüpfung 2020 folgender Ereignisse:

  - ein erster Anschluss des sechsten elektrischen Widerstands 1708 ist auf High-Pegel 2021;

- der vierte Ausgangsanschluss 1610 des zweiten

Optokopplers 1602 ist auf High-Pegel 2022 UND eine vierte INKLUSIV-ODER-Verknüpfung 2023 ist erfüllt.

Die vierte INKLUSIV-ODER-Verknüpfung 2023 ist erfüllt, wenn entweder eine fünfte INKLUSIV-ODER-Verknüpfung 2024 der folgenden Ereignisse erfüllt ist:

- Der dritte Ausgangsanschluss 1609 des zweiten Optokopplers 1602 ist auf High-Pegel 2025;
- der dritte Eingangsanschluss 1607 des zweiten Optokopplers 1602 ist auf High-Pegel 2026;
- der vierte Eingangsanschluss 1608 des zweiten Optokopplers 1602 ist auf Low-Pegel 2027;

oder

wenn der zweite Optokoppler 1602 fehlerhaft ist 2028.

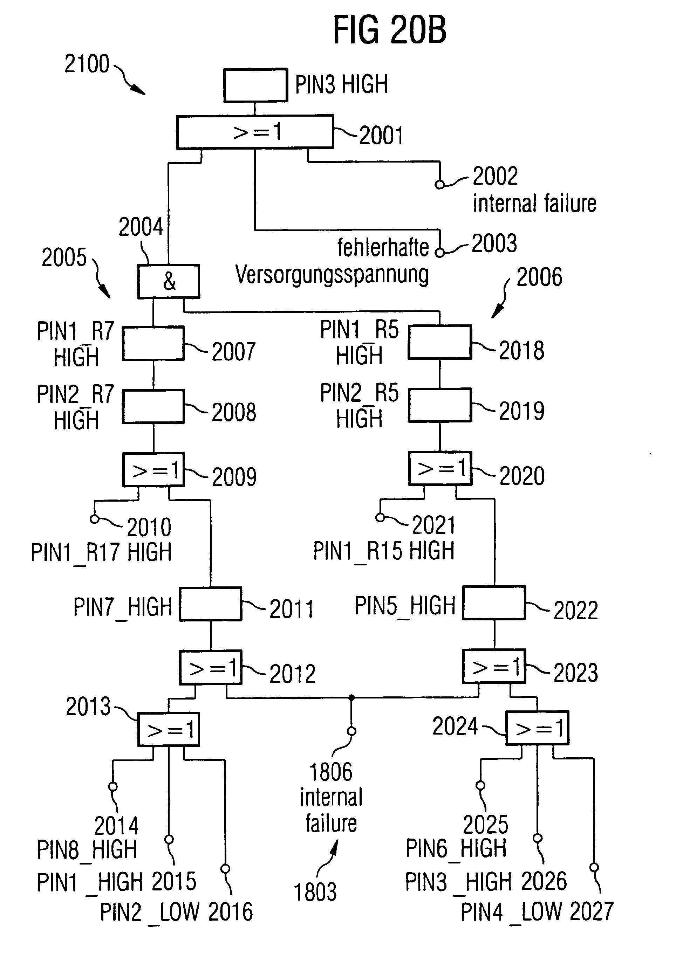

**Fig.20B** zeigt einen zweiten Gesamtfehlerbaum 2100 der in **Fig.19** dargestellten weiteren Schaltungsanordnung 1900 für den Fall, dass der Gruppen-Fehlerbaum 1803 gemäß **Fig.18B** berücksichtigt und eingefügt wird.

Der zweite Gesamtfehlerbaum 2100 und der erste Gesamtfehlerbaum 2000 sind identisch bis auf den Unterschied, dass die beiden in dem ersten Gesamtfehlerbaum 2000 getrennt aufgeführten Fehlerfälle, dass der erste Optokoppler 1601 fehlerhaft ist 2017 und dass der zweite Optokoppler 1602 fehlerhaft ist 2028 nunmehr gemäß dem Gruppen-Fehlerbaum 1803 zusammengefasst sind zu dem Gruppen-Fehlerfall "interner Fehler in dem Optokoppler-Chip 1600" 1806

### Zweites Ausführungsbeispiel

Alternativ zu dem oben beschriebenen Vorgehen werden in dem zweiten Ausführungsbeispiel die einzelnen Elemente des technischen Systems 115, im Rahmen des Ausführungsbeispiels der elektrischen Schaltung 400, als Boolesche Gleichungen dargestellt, die das Verhalten der einzelnen Elemente im Normalfall (fehlerfreier Fall) und bei Vorliegen von Fehlern beschreibt.

Für das betrachtete, vorgegebene unerwünschte Ereignis des Fehlerbaums wird das gebildete Gleichungssystem gelöst. Die Lösung wird auf den Gesamtfehlerbaum abgebildet.

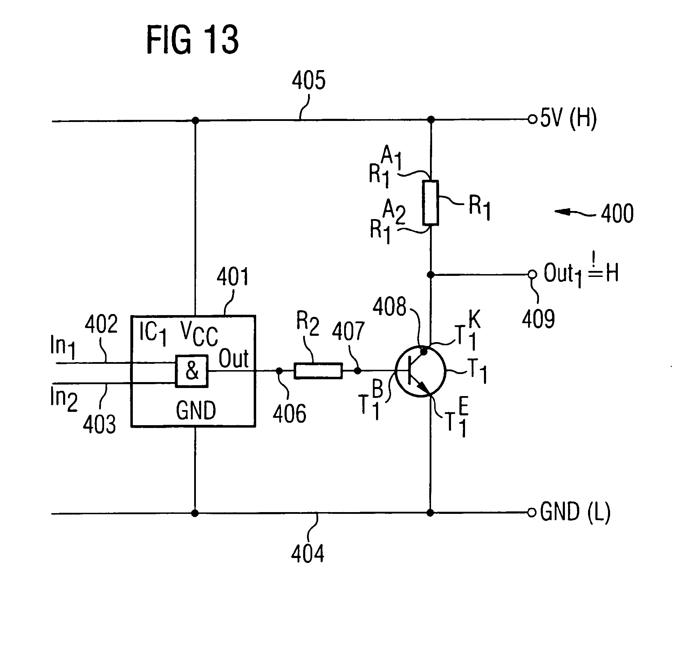

Es werden in diesem Beispiel nur "binäre" Ausfälle und Signalpegel betrachtet, so dass sich für die einzelnen Elemente der in **Fig.13** beschriebenen elektrischen Schaltung, die der elektrischen Schaltung aus **Fig.4** entsprechen, die im weiteren dargelegten Fehlergleichungen für die einzelnen Referenzelemente ergeben:

In **Fig.13** sind die mit der Schaltungsanordnung aus **Fig.4** übereinstimmenden Elemente mit gleichen Bezugszeichen versehen.

Weiterhin sind in **Fig.13** folgende Elemente dargestellt:

- ein erster Anschluss $R_1^{A1}$ des ersten elektrischen Widerstands $R_1$,

- ein zweiter Anschluss $R_1^{A2}$ des ersten elektrischen Widerstandes $R_1$,

- ein Basisanschluss $T_1^B$ des Transistors $T_1$,

- ein Emitteranschluss $T_1^E$ des Transistors $T_1$,

- ein Kollektoranschluss $T_1^K$ des Transistors $T_1$.

### Referenzelement elektrischer Widerstand

Für einen elektrischen Widerstand ergibt sich folgende Gleichung, die alle möglichen Zustände des Widerstandes beschreibt, nämlich die drei Zustände eines intakten Widerstandes, beschrieben als $R^{OK}$, eines kurzgeschlossenen Widerstandes ($R^{kurz}$) und eines durchtrennten Widerstandes ($R^{offen}$). Das Verhalten eines Widerstands R mit zwei Anschlüssen $R^{A1}$ und $R^{A2}$ wird durch die folgende Boolesche Gleichung beschrieben:

14

$$R^{kurz} \cdot \left(R^{A1} = R^{A2}\right) + R^{offen} + R^{OK} = \text{TRUE}. \tag{1}$$

Falls der Widerstand kurzgeschlossen ist ($R^{kurz}$), so besitzen beide Anschlüsse $R^{A1}$ und $R^{A2}$ einen identischen logischen Wert. Falls der Widerstand intakt ($R^{OK}$) oder durchtrennt ist ($R^{offen}$), so ist über die logischen Werte der Anschlüsse keine Aussage möglich. Sie können identisch oder verschieden sein.

**Referenzelement npn-Bipolar-Transistor**

Das Verhalten eines npn-Bipolar-Transistors mit einem Emitteranschluss ($T^E$), einem Basisanschluss ($T^B$) und einem Kollektoranschluss ($T^K$) wird durch folgende Boolesche Gleichung beschrieben:

$$\left[T^{kurz} + \left[T^{OK} \cdot \left(T^B = H\right)\right]\right] \cdot \left(T^E = T^K\right) + T^{offen} +$$
$$+ \left[T^{OK} \cdot \left(T^B = L\right)\right] = \text{TRUE} \tag{2}$$

Falls der Transistor intakt ist ($T^{OK}$) und die Basis den logischen Wert H besitzt, das heißt, dass an dem Basisanschluss $T^B$ ein High-Pegel anliegt oder der Transistor kurzgeschlossen ist ($T^{kurz}$), so besitzen der Emitteranschluss ($T^E$) und der Kollektoranschluss ($T^K$) identische logische Werte ($T^E = T^K$). Falls der Transistor durchtrennt ist ($T^{offen}$) oder intakt ($T^{UK}$) und gesperrt ($T^B = L$) ist, so ist keine Aussage über die logischen Werte an dem Emitteranschluss und an dem Kollektoranschluss des Transistors möglich.

**Referenzelement elektrischer Kondensator**

Die Gleichung für einen elektrischen Kondensator entspricht der Gleichung (1) für den elektrischen Widerstand.

**Referenzelement elektrische Spule**

Die Gleichung für eine elektrische Spule entspricht der Gleichung (1) für den elektrischen Widerstand.

**Referenzelement UND-Gatter**

Diese gespeicherten allgemeinen Fehlergleichungen für die Referenzelemente werden abgebildet auf die in der elektrischen Schaltung 400 tatsächlich enthaltenen Elemente, wodurch eine Analyse der in **Fig.4** und **Fig.13** dargestellten elektrischen Schaltung 400 möglich wird. Es werden wiederum jene Situationen betrachtet, die einen High-Pegel an dem Ausgang 409 verursachen.

Es werden demnach die Lösungen der folgenden Gleichungen ermittelt:

$$\left[R_1^{kurz} \cdot \left(R_1^{A1} = R_1^{A2}\right) + R_1^{offen} + R_1^{OK}\right] +$$
$$+ \left[\left[T_1^{kurz} + \left[T_1^{OK} \cdot \left(T_1^B = H\right)\right]\right] \cdot \left(T_1^E = T_1^K\right) + T_1^{offen} + \left[T_1^{OK} \cdot \left(T_1^B = L\right)\right]\right] =$$
$$= \text{TRUE} \tag{3}$$

Hierbei sind folgende Nebenbedingungen gültig:

$$R_1^{A1} = H, \tag{4}$$

$$R_1^{A2} = T_1^K = Out_1 = H, \tag{5}$$

$$T_1^E = L. \tag{6}$$

Die Lösung ist:

$$\left[R_1^{kurz} + R_1^{offen} + R_1^{OK}\right] + \left[T_1^{offen} + \left[T_1^{OK} \cdot \left(T_1^B = L\right)\right]\right]. \tag{7}$$

Da sichergestellt ist, dass sich der erste elektrische Widerstand $R_1$ stets in einem der Zustände kurzgeschlossen, offen oder intakt befindet, kann Gleichung (7) folgendermaßen vereinfacht werden:

$$TRUE + T_1^{offen} + \left[T_1^{OK} \cdot \left(T_1^B = L\right)\right]. \tag{8}$$

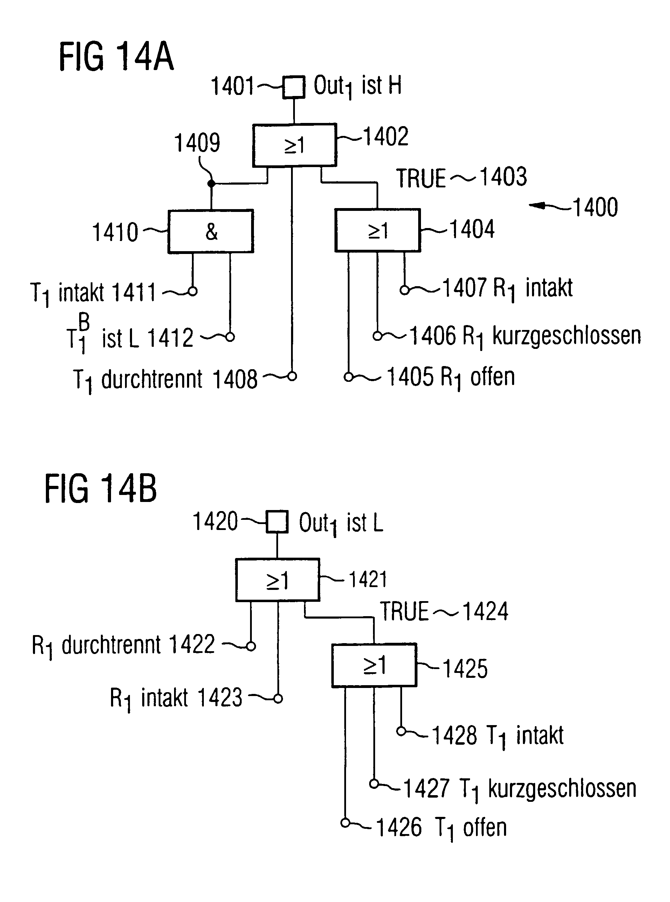

Diese Lösung wird direkt in den in **Fig.14a** dargestellten Fehlerbaum umgesetzt.
Ein Fehlerbaum 1400 für einen High-Pegel für das Ausgangssignal $Out_1$ 1401 ergibt sich durch INKLUSIV-ODER-Verknüpfung 1402 der Ereignisse TRUE 1403, welches sich ergibt durch INKLUSIV-ODER-Verknüpfung 1404 folgender Ereignisse:

- Der erste elektrische Widerstand $R_1$ ist offen 1405;
- der erste elektrische Widerstand $R_1$ ist kurzgeschlossen 1406;
- der erste elektrische Widerstand $R_1$ ist intakt 1407.

Ein weiteres Ereignis, das zu einem High-Pegel für das Ausgangssignal $Out_1$ führt, ist das Ereignis, dass der Transistor $T_1$ durchtrennt ist 1408.
Weiterhin ergibt sich der High-Pegel für das Ausgangssignal $Out_1$ bei einem ersten UND-Zwischensignal 1409, welches sich ergibt aus einer UND-Verknüpfung 1410 der Ereignisse, dass der Transistor $T_1$ intakt ist 1411 <u>und</u> der

Basisanschluss $T_1^B$ einen Low-Pegel aufweist 1412.

Die Ursache für diese pessimistische Aussage ist die disjunktive Verknüpfung der logischen Gleichungen der einzelnen Elemente der elektrischen Schaltung 400. So kann ein elektrischer Widerstand an seinen beiden Anschlüssen in jedem Zustand identische logische Werte besitzen. Falls er kurzgeschlossen ist, ist sichergestellt, dass die Werte an den Anschlüssen identisch sind. Falls er durchtrennt oder intakt ist, bestimmt der Zustand der umgebenden Elemente der elektrischen Schaltung die logischen Werte. Aufgrund der disjunktiven Verknüpfung der logischen Gleichungen werden Einschränkungen durch andere Elemente der elektrischen Schaltung 400 nicht betrachtet, um zu verhindern, dass mögliche Ursachen fälschlicherweise unterdrückt werden. In der vorliegenden Schaltung würde das für die Situation eintreten, in der sowohl der erste elektrische Widerstand $R_1$ als auch der Transistor $T_1$ kurzgeschlossen sind. Das Ausgangssignal $Out_1$ kann sowohl einen High-Pegel als auch einen Low-Pegel aufweisen. Dies würde bei einer konjunktiven Verknüpfung aber nicht erkannt, da die Bedingungen $H = R_1^{A1} =$

$R_1^{A2} = Out_1 = T_1^{K} = T_1^{E} = L$ den Booleschen Wert falsch ergibt und daher herausfällt. Nachteilig ist, dass aufgrund der disjunktiven Verknüpfung auch ein intakter oder durchtrennter erster elektrischer Widerstand $R_1$ als Ursache eines High-Pegels des Ausgangssignals $Out_1$ identifiziert wird. Dies ist aber nur dann korrekt, falls der Transistor $T_1$ durchtrennt oder aufgesteuert ist. Diese beiden Ursachen sind aber bereits in der Lösung enthalten, so dass man als korrekte Lösung den folgenden Term erhält:

$$R_1^{kurz} + T_1^{offen} + \left[ T_1^{OK} \cdot \left( T_1^{B} = L \right) \right] \tag{9}$$

Die Lösung $TRUE + T_1^{offen} + \left[ T_1^{OK} \cdot \left( T_1^{B} = L \right) \right]$ enthält die Lösung gemäß Vorschrift (9).

Es ist garantiert, dass dies bei einer disjunktiven Verknüpfung der logischen Gleichungen stets erfüllt ist. Die Unsauberkeit, die durch die Nichtberücksichtigung der Wechselwirkungen verursacht wird, kann in diesem Fall nicht zu einem zu optimistischen Fehlerbaum führen.

Die Auswertung der elektrischen Schaltung 400 hinsichtlich eines Low-Pegels für das Ausgangssignal $Out_1$ erfolgt analog. Es werden die Lösungen der Gleichung (3) ermittelt, die die folgenden Bedingungen erfüllen:

$$R_1^{A1} = H, \tag{10}$$

$$R_1^{A2} = T_1^{K} = Out_1 = L, \tag{11}$$

$$T_1^{E} = L. \tag{12}$$

Die Lösung ist:

$$\left[ R_1^{offen} + R_1^{OK} \right] + \left[ \begin{array}{l} \left[ T_1^{kurz} + \left[ T_1^{OK} \cdot \left( T_1^{B} = H \right) \right] \right] + T_1^{offen} + \\ \left[ T_1^{OK} \cdot \left( T_1^{B} = L \right) \right] \end{array} \right]. \tag{13}$$

Das ist identisch zu:

$$\left[R_1^{offen} + R_1^{OK}\right] + \left[T_1^{kurz} + T_1^{OK} + T_1^{offen}\right]. \tag{14}$$

Da sichergestellt ist, dass sich der Transistor $T_1$ stets in einem der Zustände kurzgeschlossen, offen oder intakt befindet, kann dies folgendermaßen vereinfacht werden:

$$R_1^{offen} + R_1^{OK} + TRUE. \tag{15}$$

Der sich ergebende Fehlerbaum ist in **Fig.14b** dargestellt. Der sich ergebende Low-Pegel für das Ausgangssignal 1420 ergibt sich durch INKLUSIV-ODER-Verknüpfung 1421 der Ereignisse, dass der erste elektrische Widerstand durchtrennt ist 1422, der erste elektrische Widerstand $R_1$ intakt ist 1423 und dem Ereignis TRUE 1424, das immer erfüllt ist, da es sich ergibt aus der INKLUSIV-ODER-Verknüpfung 1425 folgender Ereignisse:

-   Der Transistor $T_1$ ist offen 1426;
-   der Transistor $T_1$ ist kurzgeschlossen 1427;
-   der Transistor $T_1$ ist intakt 1428.

Die Beschreibung der einzelnen Elemente der elektrischen Schaltung mit unabhängigen Gleichungen führt unter Umständen zu einer zu pessimistischen Bewertung der Situation. So beschreibt zum Beispiel die Gleichung (1) eines Widerstandes nur dann einen Zusammenhang zwischen den logischen Werten der Anschlüsse, falls der Widerstand kurzgeschlossen ist. In allen anderen Fällen sind alle logischen Werte möglich. Im Kontext einer bestimmt Einbindung eines Widerstandes in eine elektrische Schaltung gilt das jedoch nicht.

Daher ist es gegebenenfalls sinnvoll, nicht einzelne Elemente, sondern elementare Schaltungskomponenten durch ihre logischen Gleichungen zu beschreiben. Im Falle der Emitterschaltung nach **Fig.4** bzw. **Fig.13** erhält man folgende logische Gleichung:

$$\left[R_1^{kurz} \cdot T_1^{kurz} + R_1^{offen} \cdot T_1^{offen}\right] + \left[R_1^{kurz} \cdot \left(Out_1 = R_1^{A1}\right)\right] +$$

$$+ \left[T_1^{kurz} \cdot \left(Out_1 = T_1^{E}\right)\right] +$$

$$+ \left[T_1^{OK} \cdot \left(T_1^{B} = H\right) \cdot \left(R_1^{offen} + R_1^{OK}\right) \cdot \left(Out_1 = T_1^{E}\right)\right] +$$

$$+ \left[T_1^{OK} \cdot R_1^{offen} \cdot \left(T_1^{B} = L\right)\right] + \left[T_1^{offen} \cdot R_1^{OK} \cdot \left(Out_1 = R_1^{A1}\right)\right] +$$

$$+ \left[T_1^{OK} \cdot R_1^{OK} \cdot \left(T_1^{B} = L\right) \cdot \left(Out_1 = R_1^{A1}\right)\right] = TRUE \tag{16}$$

Es wird nun die Lösung der Gleichung (16) ermittelt, die die folgenden Bedingungen erfüllt:

$$R_1^{A1} = H = Out_1, \tag{17}$$

$$T_1^E = L. \tag{18}$$

Die Lösung ist:

$$\left[R_1^{kurz} \cdot T_1^{kurz} + R_1^{offen} \cdot T_1^{offen}\right] + \left[R_1^{kurz}\right] +$$
$$+ \left[T_1^{OK} \cdot R_1^{offen} \cdot \left(T_1^B = L\right)\right] + \left[T_1^{offen} \cdot R_1^{OK}\right] + \tag{19}$$
$$+ \left[T_1^{OK} \cdot R_1^{OK} \cdot \left(T_1^B = L\right)\right]$$

Dies kann vereinfacht werden zu:

$$\left[T_1^{offen}\right] + \left[R_1^{kurz}\right] + \left[T_1^{OK} \cdot \left(T_1^B = L\right)\right]. \tag{20}$$

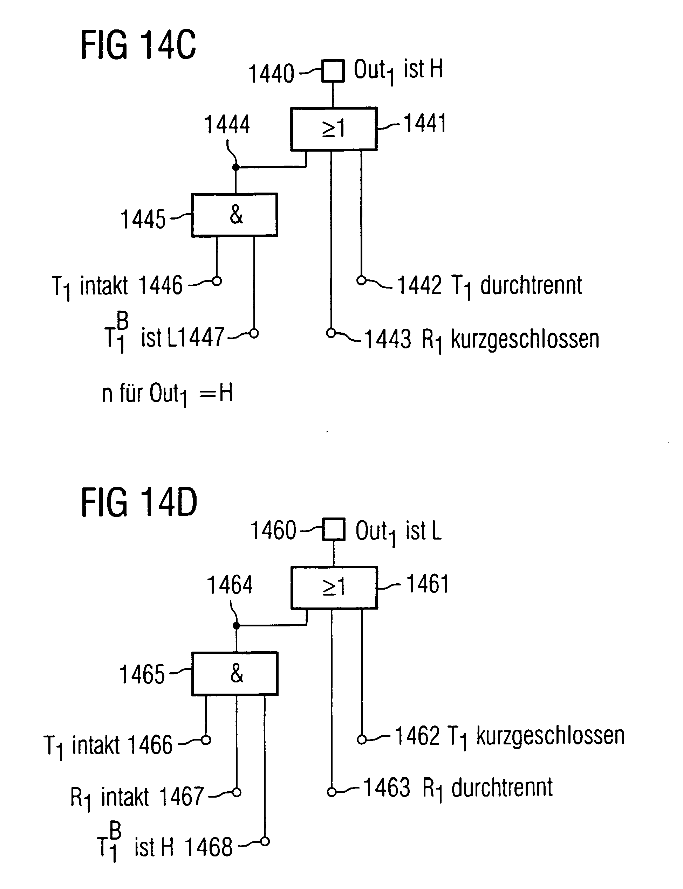

Der entsprechende Fehlerbaum ist in **Fig.14c** dargestellt. Danach ergibt sich ein High-Pegel für das Ausgangssignal Out$_1$ 1440 durch INKLUSIV-ODER-Verknüpfung 1441 der Ereignisse, dass der Transistor T$_1$ durchtrennt ist 1442, der erste elektrische Widerstand R$_1$ kurzgeschlossen ist 1443 und einem zweiten UND-Zwischensignals 1444, welches sich ergibt durch UND-Verknüpfung 1445 der Ereignisse, dass der Transistor T$_1$ intakt ist 1446 <u>und</u> dass an dem Basisanschluss $T_1^B$ des Transistors T$_1$ ein Low-Pegel anliegt 1447.

Analog kann die Lösung der Gleichung (16) bestimmt werden, die die folgenden Bedingungen erfüllt:

$$R_1^{A1} = H, \tag{21}$$

$$Out_1 = T_1^E = L. \tag{22}$$

Die Lösung ist:

$$\left[R_1^{kurz} \cdot T_1^{kurz} + R_1^{offen} \cdot T_1^{offen}\right] + \left[T_1^{kurz}\right] +$$
$$\left[T_1^{OK} \cdot \left(T_1^B = H\right) \cdot \left(R_1^{offen} + R_1^{OK}\right)\right] + \left[T_1^{OK} \cdot R_1^{offen} \cdot \left(T_1^B = L\right)\right]$$

$$\tag{23}$$

Dies kann vereinfacht werden zu:

$$\left[T_1^{kurz}\right] + \left[R_1^{offen}\right] + \left[T_1^{OK} \cdot R_1^{OK} \cdot \left(T_1^{B} = H\right)\right]. \qquad (24)$$

Der entsprechende Fehlerbaum ist in **Fig.14d** dargestellt. Danach ergibt sich ein Low-Pegel für das Ausgangssignal $Out_1$ 1460 durch INKLUSIV-ODER-Verknüpfung 1461 der Ereignisse, dass der Transistor $T_1$ kurzgeschlossen ist 1462, der erste Widerstand $R_1$ durchtrennt ist 1463 und einem dritten UND-Zwischensignals 1464, welches sich ergibt durch UND-Verknüpfung 1465 folgender Ereignisse:

- Der Transistor $T_1$ ist intakt 1466;
- der erste elektrische Widerstand $R_1$ ist intakt 1467;

- der Basisanschluss $T_1^{B}$ des Transistors $T_1$ weist einen High-Pegel auf 1468.

Im weiteren werden einige Alternativen bzw. weitere Ausgestaltungen der oben beschriebenen Ausführungsbeispiele dargestellt:

Den einzelnen Elementen können Ausfallraten, d.h. Fehlerwahrscheinlichkeiten zugeordnet werden, aus denen im Rahmen einer Fehlerbaumanalyse des ermittelten Gesamtfehlerbaums eine Gesamtausfallwahrscheinlichkeit hinsichtlich des vorgegebenen unerwünschten Ereignisses ermittelt werden können.

Allgemein kann auf den entsprechenden Gesamtfehlerbaum eine Fehlerbaumanalyse beispielsweise nach der aus [3] bekannten Fehlerbaumanalyse-Verfahren ausgeführt werden.

Weiterhin kann der sich ergebende Fehlerbaum zu einem Ursache-Wirkungs-Graph vereinfacht werden, in dem jeweils mehrfach vorkommende, identische Ursachen für ein Ereignis zusammengefasst werden und als eine Ursache in dem Ursache-Wirkungs-Graphen dargestellt werden.

Weiterhin können die einzelnen Fehlerwahrscheinlichkeiten der Referenzelemente gemäß dem sogenannten Diagnostic-Coverage-Verfahren dahin erweitert werden, dass je nach Einbindungen eines Referenzelements als Element in einer elektrischen Schaltung die Fehlerwahrscheinlichkeit des tatsächlichen in der elektrischen Schaltung vorhandenen Elements sich unterschiedlich verhalten. Dies kann in den Netzlisten berücksichtigt werden, wodurch ein verbesserter, zuverlässigerer Gesamtfehlerbaum generiert werden kann.

Ferner kann der Fehlerbaum frei editierbar erweitert oder verkleinert werden, wobei eine Erweiterung beispielsweise durch Hinzufügen eines Ergänzungsfehlerbaums erfolgen kann. Ein Beispiel für einen solchen Ergänzungsfehlerbaum ist darin zu sehen, dass beispielsweise Anforderungen oder ein Fehlerbaum, der die elektromagnetische Verträglichkeit der entsprechenden betrachteten elektrischen Schaltung beschreibt, an den entsprechenden Stellen des Gesamtfehlerbaums hinzugefügt wird.

Weiterhin können unterschiedliche und/oder zusätzliche Arten von Fehlerbäumen vorgesehen sein, beispielsweise ein Fehlerbaum, bei dem nicht ein fehlerhafter Signal-Pegel betrachtet wird, sondern ein fehlerhafter Signal-PegelWechsel (Flankenwechsel) von einem High-Pegel zu einem Low-Pegel oder von einem Low-Pegel zu einem High-Pegel.

In diesem Dokument sind folgende Veröffentlichungen zitiert:

[1] DIN 25424-1: Fehlerbaumanalyse, Methoden und Bildzeichen, September 1981

[2] DIN 25424-2: Fehlerbaumanalyse; Handrechenverfahren zur Auswertung eines Fehlerbaums, April 1990, Berlin, Beuth-Verlag GmbH

[3] IEEE Software, Seite 48-59, Juli 1991

[4] P. Liggesmeyer, O. Mäckel, Automatisierung erweiterter Fehlerbaumanalysen für komplexe technische Systeme, at Automatisierungstechnik, Oldenbourg Verlag, S. 67 - 76, Nr.2, Februar 2000

[5] WO-A-00/75780

[6] Sang Hoon Han, Tae Woon Kim, Young Choi & Kun Joung Yoo, "Development of a Computer Code AFTC for Fault Free Construction Using Decision Table Method and Super Component Concept", Reliability Engineering and System Safety 25 (1989), Seiten 15-31.

## EP 1 364 286 B1

[7] Camarinopoulos Leonidas, Hussels Ulrich, "Eine Methode zur Automatischen Fehlerbaumentwicklung", Angewandte Informatik, Bd. 27, Nr. 9, 1985, Seiten 389-399.

**Patentansprüche**

1. Verfahren zum Ermitteln einer Gesamtfehlerbeschreibung zumindest eines Teils eines technischen Systems, durch einen Rechner,

   • bei dem das System mit einer durch den Rechner verarbeitbaren, gespeicherten Systembeschreibung beschrieben ist,
   • bei dem die Systembeschreibung Informationen über in dem System vorhandene Elemente und über deren Verbindungen miteinander enthält,
   • bei dem für jedes berücksichtigte Element unter Verwendung einer gespeicherten Fehlerbeschreibung, die jeweils einem Referenzelement zugeordnet ist, eine Elementenfehlerbeschreibung ermittelt wird, mit der mögliche Fehler des jeweiligen Elements beschrieben werden,
   • bei dem mit einer Fehlerbeschreibung eines Referenzelements mögliche Fehler des jeweiligen Referenzelements beschrieben werden, **gekennzeichnet dadurch, daß**
   • bei dem zumindest ein Teil der Referenzelemente zu einer Referenzelementengruppe gruppiert ist,
   • bei dem zu den Referenzelementen einer Referenzelementengruppe unter Verwendung einer gespeicherten Gruppen-Fehlerbeschreibung, die jeweils einer Referenzelementengruppe zugeordnet ist, eine Gruppenfehlerbeschreibung ermittelt wird, mit der mögliche Fehler der Referenzelemente der Referenzelementengruppe beschrieben werden, und
   • bei dem aus den Elementenfehlerbeschreibungen und der Gruppenfehlerbeschreibungen die Gesamtfehlerbeschreibung unter Berücksichtigung der Information über die Verbindungen der Elemente ermittelt wird.

2. Verfahren nach Anspruch 1,
   bei dem die Gruppenfehlerbeschreibung zumindest einen Fehler beschreibt, der eine Auswirkung auf mehrere Referenzelemente der Referenzelementengruppe hat.

3. Verfahren nach Anspruch 1 oder 2,
   bei dem die Gruppierung der Referenzelemente zu einer Referenzelementengruppe gemäß zumindest einem vorgegebenen Gruppierungskriterium erfolgt.

4. Verfahren nach einem der Ansprüche 1 bis 3,
   bei dem die Systembeschreibung in einer Hardware-Beschreibungssprache vorliegt.

5. Verfahren nach einem der Ansprüche 1 bis 4,

   • bei dem die Systembeschreibung Informationen über eine Informationsflussrichtung umfasst, mit der angegeben wird, in welcher Richtung sich Information innerhalb des technischen Systems ausbreitet,
   • bei dem die Gesamtfehlerbeschreibung unter Berücksichtigung der Informationsflussrichtung erfolgt.

6. Verfahren nach einem der vorangegangenen Ansprüche,

   • bei dem die Fehlerbeschreibung in Form eines gespeicherten Fehlerbaums vorliegt,
   • bei dem die Elementenfehlerbeschreibung als Elementenfehlerbaum ermittelt wird, und
   • bei dem die Gesamtfehlerbeschreibung als Gesamtfehlerbaum ermittelt wird.

7. Verfahren nach einem der Ansprüche 1 bis 5,

   • bei dem die Fehlerbeschreibung in Form einer Gleichung vorliegt, die mögliche Zustände des Referenzelements beschreibt,
   • bei dem die Elementenfehlerbeschreibung als Elementengleichung ermittelt wird, und
   • bei dem die Gesamtfehlerbeschreibung als Gesamtfehlergleichung ermittelt wird.

8. Verfahren nach Anspruch 7,
   bei dem aus der Gesamtfehlergleichung ein Gesamtfehlerbaum ermittelt wird.

**9.** Verfahren nach einem der vorangegangenen Ansprüche,
bei dem zumindest ein Referenzelement ein Element einer elektrischen Schaltung beschreibt.

**10.** Verfahren nach einem der vorangegangenen Ansprüche, eingesetzt zur Fehleranalyse des technischen Systems.

**11.** Verfahren nach einem der vorangegangenen Ansprüche,

- bei dem die Gesamtfehlerbeschreibung als Gesamtfehlerbaum ermittelt wird,
- bei dem der Gesamtfehlerbaum verändert wird hinsichtlich vorgebbarer Rahmenbedingungen.

**12.** Verfahren nach Anspruch 11,
bei dem die Veränderung durch Hinzufügen eines Ergänzungsfehlerbaums erfolgt.

**13.** Verfahren nach Anspruch 11 oder 12,
bei dem die Rahmenbedingung beschrieben wird durch Bedingungen hinsichtlich Elektromagnetischer Verträglichkeit.

**14.** Anordnung zur Ermittlung einer Gesamtfehlerbeschreibung zumindest eines Teils eines technischen Systems,
mit einem Prozessor, der derart eingerichtet ist, dass folgende Schritte durchführbar sind:

- das System ist mit einer durch die Anordnung verarbeitbaren, gespeicherten Systembeschreibung beschrieben,
- die Systembeschreibung umfasst Informationen über in dem System vorhandene Elemente und über deren Verbindungen miteinander,
- für jedes berücksichtigte Element wird unter Verwendung einer gespeicherten Fehlerbeschreibung, die jeweils einem Referenzelement zugeordnet ist, eine Elementenfehlerbeschreibung ermittelt, mit der mögliche Fehler des jeweiligen Elements beschrieben werden,
- mit einer Fehlerbeschreibung eines Referenzelements werden mögliche Fehler des jeweiligen Referenzelements beschrieben, **gekennzeichnet dadurch, daß**
- zumindest ein Teil der Referenzelemente ist zu einer Referenzelementengruppe gruppiert,
- zu den Referenzelementen einer Referenzelementengruppe wird unter Verwendung einer gespeicherten Gruppen-Fehlerbeschreibung, die jeweils einer Referenzelementengruppe zugeordnet ist, eine Gruppenfehlerbeschreibung ermittelt, mit der mögliche Fehler der Referenzelemente der Referenzelementengruppe beschrieben werden, und
- aus den Elementenfehlerbeschreibungen und den Gruppenfehlerbeschreibungen wird die Gesamtfehlerbeschreibung unter Berücksichtigung der Information über die Verbindungen der Elemente ermittelt.

**15.** Anordnung nach Anspruch 14,
bei der die Gruppenfehlerbeschreibung zumindest einen Fehler beschreibt, der eine Auswirkung auf mehrere Referenzelemente der Referenzelementengruppe hat.

**16.** Anordnung nach Anspruch 14 oder 15,
bei der der Prozessor derart eingerichtet ist, dass die Gruppierung der Referenzelemente zu einer Referenzelementengruppe gemäß zumindest einem vorgegebenen Gruppierungskriterium erfolgt.

**17.** Anordnung nach einem der Ansprüche 14 bis 16,
bei der die Systembeschreibung in einer Hardware-Beschreibungssprache vorliegt.

**18.** Anordnung nach einem der Ansprüche 14 bis 17,
bei der der Prozessor derart eingerichtet ist, dass

- die Systembeschreibung Informationen über eine Informationsflussrichtung umfasst, mit der angegeben wird, in welcher Richtung sich Information innerhalb des technischen Systems ausbreitet,
- die Gesamtfehlerbeschreibung unter Berücksichtigung der Informationsflussrichtung erfolgt.

**19.** Anordnung nach einem der Ansprüche 14 bis 18,
bei der der Prozessor derart eingerichtet ist, dass

- die Fehlerbeschreibung in Form eines gespeicherten Fehlerbaums vorliegt,
- die Elementenfehlerbeschreibung als Elementenfehlerbaum ermittelt wird, und
- die Gesamtfehlerbeschreibung als Gesamtfehlerbaum ermittelt wird.

20. Anordnung nach einem der Ansprüche 14 bis 19,
bei der der Prozessor derart eingerichtet ist, dass

- die Fehlerbeschreibung in Form einer Gleichung vorliegt, die mögliche Zustände des Referenzelements beschreibt,
- die Elementenfehlerbeschreibung als Elementengleichung ermittelt wird, und
- die Gesamtfehlerbeschreibung als Gesamtfehlergleichung ermittelt wird.

21. Anordnung nach Anspruch 20,
bei der der Prozessor derart eingerichtet ist, dass aus der Gesamtfehlergleichung ein Gesamtfehlerbaum ermittelt wird.

22. Anordnung nach einem der Ansprüche 14 bis 21,
bei der der Prozessor derart eingerichtet ist, dass zumindest ein Referenzelement ein Element einer elektrischen Schaltung beschreibt.

23. Anordnung nach einem der Ansprüche 14 bis 22,
eingesetzt zur Fehleranalyse des technischen Systems.

24. Anordnung nach einem der Ansprüche 14 bis 23,
bei der der Prozessor derart eingerichtet ist, dass

- die Gesamtfehlerbeschreibung als Gesamtfehlerbaum ermittelt wird,
- der Gesamtfehlerbaum verändert wird hinsichtlich vorgebbarer Rahmenbedingungen.

25. Anordnung nach Anspruch 24,
bei der der Prozessor derart eingerichtet ist, dass die Veränderung durch Hinzufügen eines Ergänzungsfehlerbaums erfolgt.

26. Anordnung nach Anspruch 24 oder 25,
bei dem die Rahmenbedingung beschrieben wird durch Bedingungen hinsichtlich Elektromagnetischer Verträglichkeit.

27. Computerprogramm-Element, das ein computerlesbares Speichermedium umfasst, auf dem ein Programm gespeichert ist, das es einem Computer ermöglicht, nachdem es in einen Speicher des Computers geladen worden ist, folgende Schritte durchzuführen zur Ermittlung einer Gesamtfehlerbeschreibung zumindest eines Teils eines technischen Systems:

- das System ist mit einer durch die Anordnung verarbeitbaren, gespeicherten Systembeschreibung beschrieben,
- die Systembeschreibung umfasst Informationen über in dem System vorhandene Elemente und über deren Verbindungen miteinander,
- für jedes berücksichtigte Element wird unter Verwendung einer gespeicherten Fehlerbeschreibung, die jeweils einem Referenzelement zugeordnet ist, eine Elementenfehlerbeschreibung ermittelt, mit der mögliche Fehler des jeweiligen Elements beschrieben werden,
- mit einer Fehlerbeschreibung eines Referenzelements werden mögliche Fehler des jeweiligen Referenzelements beschrieben, **gekennzeichnet dadurch, daß**
- zumindest ein Teil der Referenzelemente ist zu einer Referenzelementengruppe gruppiert,
- zu den Referenzelementen einer Referenzelementengruppe wird unter Verwendung einer gespeicherten Gruppen-Fehlerbeschreibung, die jeweils einer Referenzelementengruppe zugeordnet ist, eine Gruppenfehlerbeschreibung ermittelt, mit der mögliche Fehler der Referenzelemente der Referenzelementengruppe beschrieben werden,
- aus den Elementenfehlerbeschreibungen und den Gruppenfehlerbeschreibungen wird die Gesamtfehlerbeschreibung unter Berücksichtigung der Information über die Verbindungen der Elemente ermittelt.

**28.** Computerlesbares Speichermedium, auf dem ein Programm gespeichert ist, das es einem Computer ermöglicht, nachdem es in einen Speicher des Computers geladen worden ist, folgende Schritte durchzuführen zur Ermittlung einer Gesamtfehlerbeschreibung zumindest eines Teils eines technischen Systems:

• das System ist mit einer durch die Anordnung verarbeitbaren, gespeicherten Systembeschreibung beschrieben,

• die Systembeschreibung umfasst Informationen über in dem System vorhandene Elemente und über deren Verbindungen miteinander,

• für jedes berücksichtigte Element wird unter Verwendung einer gespeicherten Fehlerbeschreibung, die jeweils einem Referenzelement zugeordnet ist, eine Elementenfehlerbeschreibung ermittelt, mit der mögliche Fehler des jeweiligen Elements beschrieben werden,

• mit einer Fehlerbeschreibung eines Referenzelements werden mögliche Fehler des jeweiligen Referenzelements beschrieben, **gekennzeichnet dadurch, daß**

• zumindest ein Teil der Referenzelemente ist zu einer Referenzelementengruppe gruppiert,

• zu den Referenzelementen einer Referenzelementengruppe wird unter Verwendung einer gespeicherten Gruppen-Fehlerbeschreibung, die jeweils einer Referenzelementengruppe zugeordnet ist, eine Gruppenfehlerbeschreibung ermittelt, mit der mögliche Fehler der Referenzelemente der Referenzelementengruppe beschrieben werden,

• aus den Elementenfehlerbeschreibungen und den Gruppenfehlerbeschreibungen wird die Gesamtfehlerbeschreibung unter Berücksichtigung der Information über die Verbindungen der Elemente ermittelt.

**Claims**

**1.** Method for determining a full error description for at least one part of a technical system, by means of a computer,

• where the system is described by means of a stored system description which can be processed by the computer,

• where the system description contains information on elements available in the system and on the links between them,

• where an element error description is determined for each element taken into consideration, using a stored error description which is respectively associated with a reference element, by means of which possible errors of the respective element are described,

• where possible errors of a respective reference element are described by means of an error description of the reference element,

**characterised in that**

• where at least one part of the reference elements is grouped into a reference element group,

• where a group error description is determined for the reference elements of a reference element group using a stored group error description which is respectively associated with a reference element group, by means of which possible errors of the reference elements of the reference element group are described, and

• where a full error description is determined from the element error descriptions and the group error descriptions, taking into account information on element links.

**2.** Method according to claim 1,
where the group error description describes at least one error which has an effect on several reference elements of the reference element group.

**3.** Method according to claim 1 or 2,
where the grouping of the reference elements into a reference element group takes place according to at least one predefined grouping criterion.

**4.** Method according to one of claims 1 to 3,
where the system description is present in a hardware description language.

**5.** Method according to one of claims 1 to 4,

• where the system description includes information on an information flow direction which indicates the direction in which information is propagated within the technical system,
• where the full error description is effected taking account of the information flow direction.

6. Method according to one of the previous claims,

   • where the error description is present in the form of a stored error tree,
   • where the element error description is determined as an element error tree, and
   • where the full error description is determined as a full error tree.

7. Method according to one of claims 1 to 5,

   • where the error description is present in the form of an equation which describes possible states of the reference element,
   • where the element error description is determined as an element equation, and
   • where the full error description is determined as a full error equation.

8. Method according to claim 7,
   where a full error tree is determined from the full error equation.

9. Method according to one of the previous claims,
   where at least one reference element describes an element of an electrical circuit.

10. Method according to one of the previous claims,
    which is employed for the purposes of error analysis of the technical system.

11. Method according to one of the previous claims,

    • where the full error description is determined as a full error tree,
    • where the full error tree is changed in relation to predefinable framework conditions.

12. Method according to claim 11,
    where the change is effected by the addition of a supplementary error tree.

13. Method as claimed in claim 11 or 12,
    where the framework condition is described by conditions in relation to electromagnetic compatibility.

14. Configuration for determining a full error description of at least one part of a technical system with a processor which is arranged in such a manner that the following steps can be carried out:

    • the system is described by means of a stored system description which can be processed by the configuration,
    • the system description includes information on elements available in the system and on the links between them,
    • an element error description is determined for each element taken into consideration, using a stored error description which is respectively associated with a reference element, by means of which possible errors of the respective element are described,
    • possible errors of a respective reference element are described by means of an error description of the reference element,

    **characterized in that**

    • at least one part of the reference elements is grouped into a reference element group,
    • a group error description is determined for the reference elements of a reference element group using a stored group error description which is respectively associated with a reference element group, by means of which possible errors of the reference elements of the reference element group are described, and
    • a full error description is determined from the element error descriptions and the group error descriptions, taking into account information on element links.

15. Configuration according to claim 14,

where the group error description describes at least one error which has an effect on several reference elements of the reference element group.

16. Configuration according to claim 14 or 15,
    where the processor is arranged in such a manner that the grouping of the reference elements into a reference element group takes place according to at least one predefined grouping criterion.

17. Configuration according to one of claims 14 to 16,
    where the system description is present in a hardware description language.

18. Configuration according to one of claims 14 to 17,
    where the processor is arranged in such a manner that

    • the system description includes information on an information flow direction which indicates the direction in which information is propagated within the technical system,
    • the full error description is effected taking account of the information flow direction.

19. Configuration according to one of claims 14 to 18,
    where the processor is arranged in such a manner that

    • the error description is present in the form of a stored error tree,
    • the element error description is determined as an element error tree, and
    • the full error description is determined as a full error tree.

20. Configuration according to one of claims 14 to 19,
    where the processor is arranged in such a manner that

    • the error description is present in the form of an equation which describes possible states of the reference element,
    • the element error description is determined as an element equation, and
    • the full error description is determined as a full error equation.

21. Configuration according to claim 20,
    where the processor is arranged in such a manner that a full error tree is determined from the full error equation.

22. Configuration according to one of claims 14 to 21,
    where the processor is arranged in such a manner that at least one reference element describes an element of an electrical circuit.

23. Configuration according to one of claims 14 to 22,
    which is employed for the purposes of error analysis of the technical system.

24. Configuration according to one of claims 14 to 23,
    where the processor is arranged in such a manner that

    • the full error description is determined as a full error tree,
    • the full error tree is changed in relation to predefinable framework conditions.

25. Configuration according to claim 24,
    where the processor is arranged in such a manner that the change is effected by the addition of a supplementary error tree.

26. Configuration according to claim 24 or 25,
    where the framework condition is described by conditions in relation to electromagnetic compatibility.

27. Computer program element which includes a computer-readable storage medium on which a program is stored which allows a computer, once it has been loaded into a memory of the computer, to carry out the following steps for the purposes of determining a full error description of at least one part of a technical system:

• the system is described by means of a stored system description which can be processed by the configuration,
• the system description includes information on elements available in the system and on the links between them,
• an element error description is determined for each element taken into consideration, using a stored error description which is respectively associated with a reference element, by means of which possible errors of the respective element are described,
• possible errors of a respective reference element are described by means of an error description of the reference element,

**characterised in that**

• at least one part of the reference elements is grouped into a reference element group,
• a group error description is determined for the reference elements of a reference element group using a stored group error description which is respectively associated with a reference element group, by means of which possible errors of the reference elements of the reference element group are described,
• a full error description is determined from the element error descriptions and the group error descriptions, taking into account information on element links.

28. Computer-readable storage medium on which a program is stored which allows a computer, once it has been loaded into a memory of the computer, to carry out the following steps for the purposes of determining a full error description of at least one part of a technical system:

• the system is described by means of a stored system description which can be processed by the configuration,
• the system description includes information on elements available in the system and on the links between them,
• an element error description is determined for each element taken into consideration, using a stored error description which is respectively associated with a reference element, by means of which possible errors of the respective element are described,
• possible errors of a respective reference element are described by means of an error description of the reference element,

**characterised in that**

• at least one part of the reference elements is grouped into a reference element group,
• a group error description is determined for the reference elements of a reference element group using a stored group error description which is respectively associated with a reference element group, by means of which possible errors of the reference elements of the reference element group are described,
• a full error description is determined from the element error descriptions and the group error descriptions, taking into account information on element links.

## Revendications

1. Procédé destiné à déterminer une description d'erreur globale d'au moins une partie d'un système technique au moyen d'un ordinateur,

• dans lequel le système est décrit à l'aide d'une description de système mémorisée, traitable par l'ordinateur,
• dans lequel la description du système contient des informations concernant des éléments présents dans le système et concernant leurs liaisons mutuelles,
• dans lequel une description d'erreur d'élément, au moyen de laquelle des erreurs possibles de l'élément respectif sont décrites, est déterminée pour chaque élément considéré, en utilisant une description d'erreur mémorisée, qui est affectée à respectivement un élément de référence,
• dans lequel des erreurs possibles de l'élément de référence respectif sont décrites à l'aide d'une description d'erreur d'un élément de référence respectif, **caractérisé en ce que**,
• dans lequel au moins une partie des éléments de référence est regroupée en un groupe d'éléments de référence,
• dans lequel une description d'erreur de groupe, à l'aide de laquelle des erreurs possibles des éléments de référence du groupe d'éléments de référence sont décrites, est déterminée pour les éléments de référence d'un groupe d'éléments de référence en utilisant une description d'erreur de groupe mémorisée, qui est affectée à respectivement un groupe d'éléments de référence, et

    • dans lequel la description d'erreur globale est déterminée à partir des descriptions d'erreurs d'éléments et des descriptions d'erreurs de groupe en tenant compte de l'information concernant les liaisons des éléments.

2. Procédé selon la revendication 1,
dans lequel la description d'erreur de groupe décrit au moins une erreur qui a une conséquence sur plusieurs éléments de référence du groupe d'éléments de référence.

3. Procédé selon la revendication 1 ou 2,
dans lequel le regroupement des éléments de référence en un groupe d'éléments de référence est réalisé selon au moins un critère de regroupement prédéfini.

4. Procédé selon l'une quelconque des revendications 1 à 3,
dans lequel la description du système est présente dans un langage de description Hardware.

5. Procédé selon l'une quelconque des revendications 1 à 4,

    • dans lequel la description du système comprend des informations concernant un sens de flux d'information, au moyen desquelles il est indiqué dans quel sens l'information se répand dans le système technique,
    • dans lequel la description d'erreur globale est réalisée en tenant compte du sens de flux d'information.

6. Procédé selon l'une quelconque des revendications précédentes,

    • dans lequel la description d'erreur est présente sous forme d'un arbre d'erreur mémorisé,
    • dans lequel la description d'erreur d'élément est déterminée en tant qu'arbre d'erreur d'élément, et
    • dans lequel la description d'erreur globale est déterminée en tant qu'arbre d'erreur globale.

7. Procédé selon l'une quelconque des revendications 1 à 5,

    • dans lequel la description du système est présente sous forme d'une équation qui décrit des états possibles de l'élément de référence,
    • dans lequel la description d'erreur d'élément est déterminée en tant qu'équation d'élément, et
    • dans lequel la description d'erreur globale est déterminée en tant qu'équation d'erreur globale.

8. Procédé selon la revendication 7,
dans lequel un arbre d'erreur globale est déterminé à partir de l'équation d'erreur globale.

9. Procédé selon l'une quelconque des revendications précédentes,
dans lequel au moins un élément de référence décrit un élément d'un circuit électrique.

10. Procédé selon l'une quelconque des revendications précédentes,
appliqué pour l'analyse d'erreur du système technique.

11. Procédé selon l'une quelconque des revendications précédentes,

    • dans lequel la description d'erreur globale est déterminée en tant qu'arbre d'erreur globale,
    • dans lequel l'arbre d'erreur globale est modifié au regard de conditions de base prédéfinissables.

12. Procédé selon la revendication 11,
dans lequel la modification est réalisée par adjonction d'un arbre d'erreur complémentaire.

13. Procédé selon la revendication 11 ou 12,
dans lequel la condition de base est décrite par des conditions relatives à la compatibilité électromagnétique.

14. Dispositif destiné à déterminer une description d'erreur globale d'au moins une partie d'un système technique, comprenant un processeur qui est configuré de manière à ce que les étapes suivantes soient réalisables :

    • le système est décrit à l'aide d'une description de système mémorisée, traitable par le dispositif,
    • la description du système comprend des informations concernant des éléments présents dans le système et concernant leurs liaisons mutuelles,

• une description d'erreur d'élément, au moyen de laquelle des erreurs possibles de l'élément respectif sont décrites, est déterminée pour chaque élément considéré, en utilisant une description d'erreur mémorisée, qui est affectée à respectivement un élément de référence,

• des erreurs possibles de l'élément de référence respectif sont décrites à l'aide d'une description d'erreur d'un élément respectif, **caractérisé en ce qu'**

• au moins une partie des éléments de référence est regroupée en un groupe d'éléments de référence,

• une description d'erreur de groupe, à l'aide de laquelle des erreurs possibles des éléments de référence du groupe d'éléments de référence sont décrites, est déterminée pour les éléments de référence d'un groupe d'éléments de référence en utilisant une description d'erreur de groupe mémorisée, qui est affectée à respectivement un groupe d'éléments de référence, et

• la description d'erreur globale est déterminée à partir des descriptions d'erreurs d'éléments et des descriptions d'erreurs de groupe en tenant compte de l'information concernant les liaisons des éléments.

15. Dispositif selon la revendication 14,
dans lequel la description d'erreur de groupe décrit au moins une erreur qui a une conséquence sur plusieurs éléments de référence du groupe d'éléments de référence.

16. Dispositif selon la revendication 14 ou 15,
dans lequel le processeur est configuré de manière à ce que le regroupement des éléments de référence en un groupe d'éléments de référence soit réalisé selon au moins un critère de regroupement prédéfini.

17. Dispositif selon l'une quelconque des revendications 14 à 16,
dans lequel la description du système est présente dans un langage de description Harware.

18. Dispositif selon l'une quelconque des revendications 14 à 17,
dans lequel le processeur est configuré de manière à ce que

• la description du système comprenne des informations concernant un sens de flux d'information, au moyen desquelles il est indiqué dans quel sens l'information se répand dans le système technique,
• la description d'erreur globale soit réalisée en tenant compte du sens de flux d'information.

19. Dispositif selon l'une quelconque des revendications 14 à 18,
dans lequel le processeur est configuré de manière à ce que

• la description d'erreur soit présente sous forme d'un arbre d'erreur mémorisé,
• la description d'erreur d'élément soit déterminée en tant qu'arbre d'erreur d'élément, et
• a description d'erreur globale soit déterminée en tant qu'arbre d'erreur globale.

20. Dispositif selon l'une quelconque des revendications 14 à 19,
dans lequel le processeur est configuré de manière à ce que

• la description d'erreur soit présente sous forme d'une équation qui décrit des états possibles de l'élément de référence,
• la description d'erreur d'élément soit déterminée en tant qu'équation d'élément, et
• la description d'erreur globale soit déterminée en tant qu'équation d'erreur globale.

21. Dispositif selon la revendication 20,
dans lequel le processeur est configuré de manière à ce qu'un arbre d'erreur globale soit déterminé à partir de l'équation d'erreur globale.

22. Dispositif selon l'une quelconque des revendications 14 à 21,
dans lequel le processeur est configuré de manière à ce qu'au moins un élément de référence décrive un élément d'un circuit électrique.

23. Dispositif selon l'une quelconque des revendications 14 à 22,
appliqué pour l'analyse d'erreur du système technique.

**24.** Dispositif selon l'une quelconque des revendications 14 à 23,
dans lequel le processeur est configuré de manière à ce que

- la description d'erreur globale soit déterminée en tant qu'arbre d'erreur globale,
- l'arbre d'erreur globale soit modifié au regard de conditions de base prédéfinissables.

**25.** Dispositif selon la revendication 24,
dans lequel le processeur est configuré de manière à ce que la modification soit réalisée par adjonction d'un arbre d'erreur complémentaire.

**26.** Dispositif selon la revendication 24 ou 25,
dans lequel la condition de base est décrite par des conditions relatives à la compatibilité électromagnétique.

**27.** Elément de programme informatique, qui comprend un support d'information lisible par un ordinateur, sur lequel est mémorisé un programme, lequel, après avoir été chargé dans une mémoire de l'ordinateur, permet à un ordinateur de réaliser les étapes suivantes pour déterminer une description d'erreur globale d'au moins une partie d'un système technique :

- le système est décrit à l'aide d'une description de système mémorisée, traitable par le dispositif,
- la description du système contient des informations concernant des éléments présents dans le système et concernant leurs liaisons mutuelles,
- une description d'erreur d'élément, au moyen de laquelle des erreurs possibles de l'élément respectif sont décrites, est déterminée pour chaque élément considéré, en utilisant une description d'erreur mémorisée, qui est affectée à respectivement un élément de référence,
- des erreurs possibles de l'élément de référence respectif sont décrites à l'aide d'une description d'erreur d'un élément de référence, **caractérisé en ce qu'**
- au moins une partie des éléments de référence est regroupée en un groupe d'éléments de référence,
- une description d'erreur de groupe, à l'aide de laquelle des erreurs possibles des éléments de référence du groupe d'éléments de référence sont décrites, est déterminée pour les éléments de référence d'un groupe d'éléments de référence en utilisant une description d'erreur de groupe mémorisée, qui est affectée à respectivement un groupe d'éléments de référence,
- la description d'erreur globale est déterminée à partir des descriptions d'erreurs d'éléments et des descriptions d'erreurs de groupe en tenant compte de l'information concernant les liaisons des éléments.

**28.** Support d'information lisible par un ordinateur, sur lequel est mémorisé un programme, lequel, après avoir été chargé dans une mémoire de l'ordinateur, permet à un ordinateur de réaliser les étapes suivantes pour déterminer une description d'erreur globale d'au moins une partie d'un système technique :

- le système est décrit à l'aide d'une description de système mémorisée, traitable par le dispositif,
- la description du système contient des informations concernant des éléments présents dans le système et concernant leurs liaisons mutuelles,
- une description d'erreur d'élément, au moyen de laquelle des erreurs possibles de l'élément respectif sont décrites, est déterminée pour chaque élément considéré, en utilisant une description d'erreur mémorisée, qui est affectée à respectivement un élément de référence,
- des erreurs possibles de l'élément de référence respectif sont décrites à l'aide d'une description d'erreur d'un élément de référence, **caractérisé en ce qu'**
- au moins une partie des éléments de référence est regroupée en un groupe d'éléments de référence,
- une description d'erreur de groupe, à l'aide de laquelle des erreurs possibles des éléments de référence du groupe d'éléments de référence sont décrites, est déterminée pour les éléments de référence d'un groupe d'éléments de référence en utilisant une description d'erreur de groupe mémorisée, qui est affectée à respectivement un groupe d'éléments de référence,
- la description d'erreur globale est déterminée à partir des descriptions d'erreurs d'éléments et des descriptions d'erreurs de groupe en tenant compte de l'information concernant les liaisons des éléments.

FIG 1

100

103

101    104

105

102

106

107

109    111

108    110    112

114

113    115

FIG 2

# FIG 3

301 — Ermittleln einer Elementenfehlerbeschreibung für jedes berücksichtigte Element unter Verwendung einer gespeicherten Fehlerbeschreibung, die jeweils einem Referenzelement zugeordnet ist

302 — Mit einer Fehlerbeschreibung eines Referenzelements werden mögliche Fehler des jeweiligen Referenzelements beschrieben

303 — Gruppieren von Referenzelementen gemäß einem vorgegebenen Gruppierungskriterium in Referenzelementengruppen

304 — Mit einer Gruppen-Fehlerbeschreibung einer Referenzelementengruppe werden mögliche Fehler der Referenzelemente einer Referenzelementengruppe beschrieben

305 — Ermitteln der Gesamtfehlerbeschreibung aus den Elementenfehlerbeschreibungen und den Gruppen-Fehlerbeschreibungen unter Berücksichtigung der Information über die Verbindungen der Elemente

# FIG 4

405
5V (H)
R1
400
401
IC1 VCC
402
In1
402
& Out
R2
T1
408
Out1
409
In2
403
GND
406
407
GND (L)
404

# FIG 5A

501 — Ausgang fehlerhaft H
504
≥1 — 502
& — 505
500
506 R kurzgeschlossen
507 Eingang H
503 Eingang fehlerhaft H

# FIG 5B

511 — Ausgang fehlerhaft L
513
≥1 — 517
& — 514
510
515 R kurzgeschlossen
516 Eingang L
512 Eingang fehlerhaft L

# FIG 6A

600

Ausgang
fehlerhaft H ▢—601

602—| ≥1 |

603—◦
Emitter fehlerhaft H

604—◦
Basis fehlerhaft L

605—◦
Interner Ausfall
(Transistor durchtrennt)

606—◦
Kollektorwiderstand
kurzgeschlossen

# FIG 6B

610

Ausgang
fehlerhaft L ▢—611

612—| ≥1 |

613—◦
Basis fehlerhaft H

614—◦
Interner Ausfall
(Transistor kurzgeschlossen)

615—◦
Kollektorwiderstand durchtrennt

616—◦
Kollektorwiderstand
fehlerhaft auf L

# FIG 7A

701—▢ Ausgang
fehlerhaft H

704

| ≥1 |—702

705—| & |

←—700

703
Eingang
fehlerhaft H

706 707
R kurzgeschlossen Eingang H

# FIG 7B

711—▢ Ausgang
fehlerhaft L

713

| ≥1 |—717

714—| & |

←—710

712
Eingang
fehlerhaft L

715 716
R kurzgeschlossen Eingang L

## FIG 8A

801 ⟋ ☐  Ausgang
fehlerhaft H

804

≥1 ⟋ 802

← 800

& ⟋ 805

806          807          803
R kurzgeschlossen   Eingang H   Eingang fehlerhaft H

## FIG 8B

811 ⟋ ☐  Ausgang
fehlerhaft L

813

≥1 ⟋ 817

← 810

& ⟋ 814

815          816          812
R kurzgeschlossen   Eingang L   Eingang fehlerhaft L

FIG 9A

Ausgang
fehlerhaft H ⬜ ~901

902 ~ ≥1

903 ~o
Eingang 1fehlerhaft
904 ~o
Eingang 2 fehlerhaft
900 ➔
905 ~o
Eingang n fehlerhaft
906 ~o
Blockinterner Ausfall
907 ~o
Fehlerhafte
Versorgungsspannung

FIG 9B

Ausgang
fehlerhaft L ⬜ ~911

912 ~ ≥1

913 ~o
Eingang 1fehlerhaft
914 ~o
910 ➔ Eingang 2 fehlerhaft
915 ~o
Eingang n fehlerhaft
916 ~o
Blockinterner Ausfall
917 ~o
Fehlerhafte
Versorgungsspannung

EP 1 364 286 B1

**FIG 10A**

Ausgang
fehlerhaft H ☐~1001

1002~ ≥1

1009

1000 →  1010~ &

1005

& ~1006

Eingang 1 fehlerhaft H 1012~○

Eingang 2 H 1011~○

Eingang 2 fehlerhaft H 1008~○

Eingang 1 H 1007~○

Interner Ausfall (Ausgang fehlerhaft H) 1004~○

Fehlerhafte Versorgungsspannung 1003~○

**FIG 10B**

Ausgang
fehlerhaft L ☐~1021

1022~ ≥1

Eingang 1 fehlerhaft L 1023~○

Eingang 2 fehlerhaft L 1024~○

← 1020

Interner Ausfall (Ausgang fehlerhaft L) 1025~○

Fehlerhafte Versorgungsspannung 1026~○

# FIG 11

Out fehlerhaft H ▢ ∽1101

1102 ∽ | ≥1 |

T$_1$: Emitter 1106 ∽○
fehlerhaft H

T$_1$: Basis fehlerhaft L 1107 ∽

1105 ∽○

T$_1$:Interner Ausfall
(Transistor durchtrennt)

1108 ∽ | ≥1 |

1103 ∽○ 1104

R$_1$: Kollektorwiderstand
kurzgeschlossen

1110 ∽ | & |

∽1109

R$_2$: Eingang fehlerhaft L

1111 ∽○
R$_2$ kurzgeschlossen

1112 ∽○

R$_2$: Eingang L

| ≥1 | ∽1113

IC$_1$: In$_1$ fehlerhaft 1114 ∽○

IC$_1$: In$_2$ fehlerhaft 1115 ∽○

1116 ∽○

IC$_1$: Blockinterner Ausfall

1117 ∽○

IC$_1$: Fehlerhafte Versorgungsspannung

## FIG 12

Out fehlerhaft H ☐ ～1101

1102 ～ $\geq 1$

$T_1$: Emitter fehlerhaft H 1106 ～○

$T_1$: Basis fehlerhaft L 1107 ～○

1105 ～○
$T_1$: Interner Ausfall
(Transistor durchtrennt)

1104

1108 ～ $\geq 1$

1103 ～○
$R_1$: Kollektorwiderstand
kurzgeschlossen

1110 ～ & 

1109
$R_2$: Eingang fehlerhaft L

1111 ～○
$R_2$ kurzgeschlossen

1113

1112 ～○
$R_2$: Eingang L

$\geq 1$ ～1113

1207 ～

1117 $IC_1$: Fehlerhafte
Versorgungsspannung

1206 ～ &

1201 $IC_1$: Interner Ausfall
(Ausgang fehlerhaft L)

1208 ～○
$IC_1$: $In_1$ fehlerhaft L

$IC_1$: $In_2$ L 1209 ～○

1203

& ～1202

1200

1205 ～○
$IC_1$: $In_2$ fehlerhaft L

1204
$IC_1$: $In_1$ L

40

# FIG 13

## FIG 14A

1401 — □ Out$_1$ ist H

1409

$\geq 1$ — 1402

TRUE — 1403

1410 — & 

$\geq 1$ — 1404

— 1407 R$_1$ intakt

T$_1$ intakt 1411 —

T$_1^B$ ist L 1412 —

— 1406 R$_1$ kurzgeschlossen

← 1400

T$_1$ durchtrennt 1408 —

— 1405 R$_1$ offen

## FIG 14B

1420 — □ Out$_1$ ist L

$\geq 1$ — 1421

TRUE — 1424

R$_1$ durchtrennt 1422 —

$\geq 1$ — 1425

R$_1$ intakt 1423 —

— 1428 T$_1$ intakt

— 1427 T$_1$ kurzgeschlossen

— 1426 T$_1$ offen

## FIG 14C

$1440$ — Out$_1$ ist H

$1444$

$\geq 1$ — $1441$

$1445$ — &

T$_1$ intakt $1446$

T$_1^B$ ist L $1447$

$1442$ T$_1$ durchtrennt

$1443$ R$_1$ kurzgeschlossen

n für Out$_1$ = H

## FIG 14D

$1460$ — Out$_1$ ist L

$1464$

$\geq 1$ — $1461$

$1465$ — &

T$_1$ intakt $1466$

R$_1$ intakt $1467$

T$_1^B$ ist H $1468$

$1462$ T$_1$ kurzgeschlossen

$1463$ R$_1$ durchtrennt

# FIG 15

1500

# FIG 16

1600

FIG 17B

FIG 17A

# FIG 18A

# FIG 18B

# FIG 19

# FIG 20A

2000

PIN3 HIGH

>=1 — 2001

2002
internal failure

2004

2005

fehlerhafte — 2003
Versorgungsspannung

2006

&

PIN1_R7
HIGH — 2007

PIN1_R5
HIGH — 2018

PIN2_R7
HIGH — 2008

PIN2_R5
HIGH — 2019

>=1 — 2009

>=1 — 2020

2010
PIN1_R17 HIGH

2021
PIN1_R15 HIGH

PIN7_HIGH — 2011

PIN5_HIGH — 2022

>=1 — 2012

>=1 — 2023

2013

>=1

2017
internal
failure

2024

>=1

2028
internal
failure

2014
PIN8_HIGH

PIN1_HIGH 2015

PIN2_LOW 2016

2025
PIN6_HIGH

PIN3_HIGH 2026

PIN4_LOW 2027

# FIG 20B

2100

PIN3 HIGH

>=1 ~2001

2002
internal failure

2004

2005

fehlerhafte ~2003
Versorgungsspannung

& ~2006

PIN1_R7
HIGH ~2007

PIN1_R5
HIGH ~2018

PIN2_R7
HIGH ~2008

PIN2_R5
HIGH ~2019

>=1 ~2009

>=1 ~2020

~2010
PIN1_R17 HIGH

~2021
PIN1_R15 HIGH

PIN7_HIGH ~2011

PIN5_HIGH ~2022

>=1 ~2012

>=1 ~2023

2013 ~

>=1

1806
internal
failure

2024 ~ >=1

2014
PIN8_HIGH

PIN1 _HIGH 2015

PIN2 _LOW 2016

1803

2025
PIN6_HIGH

PIN3 _HIGH 2026

PIN4 _LOW 2027

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0075780 A

**In der Beschreibung aufgeführte Nicht-Patentliteratur**

- *Fehlerbaumanalyse, Methoden und Bildzeichen,* September 1981
- *Fehlerbaumanalyse; Handrechenverfahren zur Auswertung eines Fehlerbaums,* April 1990
- *IEEE Software,* Juli 1991, 48-59
- Automatisierung erweiterter Fehlerbaumanalysen für komplexe technische Systeme. **P. Liggesmeyer ; O. Mäckel.** Automatisierungstechnik. Oldenbourg Verlag, Februar 2000, 67-76
- **Sang Hoon Han ; Tae Woon Kim ; Young Choi ; Kun Joung Yoo.** Development of a Computer Code AFTC for Fault Free Construction Using Decision Table Method and Super Component Concept. *Reliability Engineering and System Safety,* 1989, vol. 25, 15-31
- **Camarinopoulos Leonidas ; Hussels Ulrich.** Eine Methode zur Automatischen Fehlerbaumentwicklung. *Angewandte Informatik,* 1985, vol. 27 (9), 389-399